(19) Europäisches Patentamt
European Patent Office
Office européen des brevets

(11) **EP 4 311 116 A1**

(12) **EUROPEAN PATENT APPLICATION**

(43) Date of publication:
**24.01.2024 Bulletin 2024/04**

(21) Application number: **22185772.5**

(22) Date of filing: **19.07.2022**

(51) International Patent Classification (IPC):
***H04B 1/403*** (2015.01)

(52) Cooperative Patent Classification (CPC):
**H04B 1/406;** G01S 7/006

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **OLESEN, Poul**
**Støvring (DK)**

• **CAPORAL DEL BARRIO, Samantha**
**Aalborg (DK)**
• **BLÜCHER BRINK, Stig**
**Aalborg Øst (DK)**
• **KNUDSEN, Knud**
**Aabybro (DK)**

(74) Representative: **Nokia EPO representatives**
**Nokia Technologies Oy**
**Karakaari 7**
**02610 Espoo (FI)**

(54) **METHOD, APPARATUS AND COMPUTER PROGRAM**

(57) There is provided apparatus for a transmitting device, the apparatus comprising: a first and a second up-converter circuit; a first and a second local oscillator; a first and a second antenna, wherein the first up-converter circuit comprises the first local oscillator, and the second up-converter circuit comprises the second local oscillator, wherein the first and the second local oscillators are configured to generate different frequency signals from each other. Each of the first and the second up-converter circuits are configured to: obtain a first signal for transmission; increase the frequency of the first signal using the first and the second local oscillators respectively; and provide the increased frequency first signal to the first and the second antennas respectively, for transmission.

Figure 5

EP 4 311 116 A1

**Description**

<u>Field</u>

The present application relates to a method, apparatus, and computer program for a wireless communication system.

<u>Background</u>

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

<u>Summary</u>

According to an aspect, there is provided an apparatus for a transmitting device, the apparatus comprising: a first and a second up-converter circuit; a first and a second local oscillator; a first and a second antenna, wherein the first up-converter circuit comprises the first local oscillator, and the second up-converter circuit comprises the second local oscillator, wherein the first and the second local oscillators are configured to generate different frequency signals from each other, wherein each of the first and the second up-converter circuits are configured to: obtain a first signal for transmission; increase the frequency of the first signal using the first and the second local oscillators respectively; and provide the increased frequency first signal to the first and the second antennas respectively, for transmission.

In an example, the first and second local oscillators are separate components.

In an example, each of the first and the second up-converter circuits are configured to obtain the first signal for transmission and provide the increased frequency first signal for transmission during an uplink gap time slot.

In an example, the frequency generated by each of the first and second local oscillators is selected using: block frequencies that are offset within an available bandwidth, or a subcarrier offset between the first and second local oscillators.

In an example, i) the first up-converter circuit, ii) the first local oscillator, and ii) the first antenna, are comprised within a first radio frequency chain.

In an example, i) the second up-converter circuit, ii) the second local oscillator, and ii) the second antenna, are comprised within a second radio frequency chain.

In an example, the apparatus comprises three or more radio frequency chains, each radio frequency chain comprising an up-converter circuit, a local oscillator, and an antenna,

wherein each frequency of signals generated by each local oscillator in the three or more radio frequency chains are different from each other.

In an example, the apparatus comprises: a digital-to-analogue converter configured to provide the first signal for transmission.

In an example, the digital-to-analogue converter is connected to both the first and the second antennas via the first and the second up-converter circuitry respectively.

In an example, the first up-converter circuit comprises a first mixer and a first power amplifier, and the second up-converter circuit comprises a second mixer and a second power amplifier.

In an example, at least one of the first and second local oscillators comprises a phase-locked loop.

In an example, each of the first and second antennas are part of a respective antenna panel, each antenna panel comprising a plurality of antennas.

In an example, the first signal is a single baseband transmission signal.

In an example, the first signals, for transmission, by each of the first and second antennas respectively are interleaved for each of the first and second antennas, such that the frequencies of the first signals of each of the first and second antennas are separate.

In an example, the transmitting device is a user equipment.

In an example, the transmitting device is configured to perform the steps for transmission during an uplink gap time slot.

In an example, the transmitting device comprises means for receiving, from a network, a configuration for transmissions during uplink gaps.

In an example, the transmitting device comprises means for receiving, from a network, an activation for transmissions during uplink gaps.

In an example, the transmissions of the increased frequency signals from the antenna for are radar operations.

According to an aspect, there is provided an apparatus for a receiving device, the apparatus comprising: a first and a second antenna; a first and a second down-converter circuit; a first and a second local oscillator; a first and a second analogue to digital converter, wherein the first down-converter circuit comprises the first local oscillator, and the second down-converter circuit comprises the second local oscillator, wherein the first and the second local oscillators are configured to generate different frequency signals from each other, wherein each of the first and the second down-converter circuits are configured to: receive a first signal via the first and second antenna respectively; decrease the frequency of the first signal using the first and the second local oscillators respectively; and provide the decreased frequency first signal to the first and the second analogue to digital converters respectively, for further signal processing.

In an example, the apparatus comprises: a first and a second filter, wherein the first filter is connected to first up-converter circuit, and the second filter is connected to the second up-converted circuit.

In an example, the second local oscillator is configured to generate a frequency that is determined using the frequency generated by the first local oscillator and a frequency offset that is dependent on a number of antennas of the apparatus.

In an example, the first and second local oscillators are separate components.

In an example, the frequency generated by each of the first and second local oscillators is selected using: block frequencies that are offset within an available bandwidth, or a subcarrier offset between the first and second local oscillators.

In an example, i) the first down-converter circuit, ii) the first local oscillator, and ii) the first antenna, are comprised within a first radio frequency chain.

In an example, i) the second down-converter circuit, ii) the second local oscillator, and ii) the second antenna, are comprised within a second radio frequency chain.

In an example, the apparatus comprises three or more radio frequency chains, each radio frequency chain comprising a down-converter circuit, a local oscillator, and an antenna, wherein each frequency of signals generated by each local oscillator in the three or more radio frequency chains are different from each other.

In an example, the first down-converter circuit comprises a first mixer and a first power amplifier, and the second down-converter circuit comprises a second mixer and a second power amplifier.

In an example, at least one of the first and second local oscillators comprises a phase-locked loop.

In an example, each of the first and second antennas are part of a respective antenna panel, each antenna panel comprising a plurality of antennas.

In an example, the receiving device is a user equipment.

In an example, the receiving device is configured to perform the steps for reception during a downlink gap time slot.

In an example, the receiving device comprises means for receiving, from a network, a configuration for receptions during downlink gaps.

According to an aspect, there is provided an apparatus for a receiving device, the apparatus comprising: a first and a second antenna; a first and a second down-converter circuit; a first and a second local oscillator; a first analogue to digital converter, wherein the first down-converter circuit comprises the first local oscillator, and the second down-converter circuit comprises the second local oscillator, wherein the first and the second local oscillators are configured to generate the same frequency signals, wherein each of the first and the second down-converter circuits are configured to: receive a first signal via the first and second antenna respectively; decrease the frequency of the first signal using the first and the second local oscillators respectively; and provide the decreased frequency first signal to the first analogue to digital converter, for further signal processing, wherein the first signals from the first and second up-converter circuits respectively are combined using a multiplexer before the first analogue to digital converter.

In an example, the apparatus comprises: a first and a second filter, wherein the first filter is connected to first up-converter circuit, and the second filter is connected to the second up-converted circuit.

In an example, the second local oscillator is configured to generate a frequency that is determined using the frequency generated by the first local oscillator and a frequency offset that is dependent on a number of antennas of the apparatus.

In an example, the first and second local oscillators are separate components.

In an example, the frequency generated by each of the first and second local oscillators is selected using: block frequencies that are offset within an available bandwidth, or a subcarrier offset between the first and second local oscillators.

In an example, i) the first down-converter circuit, ii) the first local oscillator, and ii) the first antenna, are comprised within a first radio frequency chain.

In an example, i) the second down-converter circuit, ii) the second local oscillator, and ii) the second antenna, are comprised within a second radio frequency chain.

In an example, the apparatus comprises three or more radio frequency chains, each radio frequency chain comprising a down-converter circuit, a local oscillator, and an antenna, wherein each frequency of signals generated by each local oscillator in the three or more radio frequency chains are different from each other.

In an example, the first down-converter circuit comprises a first mixer and a first power amplifier, and the second down-converter circuit comprises a second mixer and a second power amplifier.

In an example, at least one of the first and second local oscillators comprises a phase-locked loop.

In an example, each of the first and second antennas are part of a respective antenna panel, each antenna panel comprising a plurality of antennas.

In an example, the receiving device is a user equipment.

In an example, the receiving device is configured to perform the steps for reception during a downlink gap time slot.

In an example, the receiving device comprises means for receiving, from a network, a configuration for receptions during downlink gaps.

According to an aspect, there is provided a method performed by a transmitting device, the method comprising: obtaining, at a first and a second transmit chain of the transmitting device, a first signal for transmission, increasing, at the first transmit chain, the frequency of the first signal using a first frequency signal, to provide a first transmission signal; increasing, at the second transmit chain, the frequency of the first signal using a second frequency signal, to provide a second transmission signal, wherein the first frequency signal and the second frequency signal have different frequencies; and transmitting the first and the second transmission signals from the transmitting device, via a first and a second antenna respectively.

In an example, the obtaining, at each of the first and the second up-converter circuits, of the first signal for transmission, and the providing the increased frequency first signal for transmission, is performed during an uplink gap time slot.

In an example, the method comprises selecting the first and second frequencies of the first and second frequency signals, using block frequencies that are offset within an available bandwidth.

In an example, the method comprises selecting the first and second frequencies of the first and second frequency signals using a subcarrier offset.

In an example, the method comprises configuring at least one of the first and second frequency signals using a phase-locked loop.

In an example, the first signal is a single baseband transmission signal.

In an example, the first signals, for transmission, by each of the first and second antennas respectively are interleaved for each of the first and second antennas, such that the frequencies of the first signals of each of the first and second antennas are separate.

In an example, the transmitting device is a user equipment.

In an example, the method comprises receiving, from a network, a configuration for transmissions during uplink gaps.

In an example, the method comprises receiving, from a network, an activation for transmissions during uplink gaps.

In an example, the transmissions of the increased frequency signals from the antenna for are radar operations.

According to an aspect, there is provided a method performed by a receiving device, the method comprising: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have different frequencies; and providing the first and the second reception signals to a first and a second analogue-to-digital converter respectively, for further signal processing.

In an example, the receiving, at each of the first and the second down-converter circuits, of the first signal is performed during an uplink gap time slot.

In an example, the method comprises selecting the first and second frequencies of the first and second frequency signals, using block frequencies that are offset within an available bandwidth.

In an example, the method comprises selecting the first and second frequencies of the first and second frequency signals using a subcarrier offset.

In an example, the method comprises configuring at least one of the first and second frequency signals using a phase-locked loop.

In an example, the receiving device is a user equipment.

In an example, the method comprises receiving, from a network, a configuration for receptions during uplink gaps.

In an example, the method comprises receiving, from a network, an activation for receptions during uplink gaps.

According to an aspect, there is provided a method performed by a receiving device, the method comprising: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have the same frequencies; and providing the first and the second reception signals to a first analogue-to-digital converter, for further signal processing.

In an example, the receiving, at each of the first and the second down-converter circuits, of the first signal is performed during an uplink gap time slot.

In an example, the method comprises selecting the first and second frequencies of the first and second frequency signals, using block frequencies that are offset within an available bandwidth.

In an example, the method comprises selecting the first and second frequencies of the first and second frequency signals using a subcarrier offset.

In an example, the method comprises configuring at least one of the first and second frequency signals using a phase-locked loop.

In an example, the receiving device is a user equipment.

In an example, the method comprises receiving, from a network, a configuration for receptions during uplink gaps.

In an example, the method comprises receiving, from a network, an activation for receptions during uplink gaps.

According to an aspect, there is provided an apparatus for a transmitting device comprising: one or more processors, and memory storing instructions that, when executed by the one or more processors, cause the apparatus to perform: obtaining, at a first and a second transmit chain of the transmitting device, a first signal for transmission, increasing, at the first transmit chain, the frequency of the first signal using a first frequency signal, to provide a first transmission signal; increasing, at the second transmit chain, the frequency of the first signal using a second frequency signal, to provide a second transmission signal, wherein the first frequency signal and the second frequency signal have different frequencies; and transmitting the first and the second transmission signals from the transmitting device, via a first and a second antenna respectively.

In an example, the obtaining, at each of the first and the second up-converter circuits, of the first signal for transmission, and the providing the increased frequency first signal for transmission is performed during an uplink gap time slot.

In an example, the apparatus is caused to perform: selecting the first and second frequencies of the first and second frequency signals, using block frequencies that are offset within an available bandwidth.

In an example, the apparatus is caused to perform: selecting the first and second frequencies of the first and second frequency signals using a subcarrier offset.

In an example, the apparatus is caused to perform: configuring at least one of the first and second frequency signals using a phase-locked loop.

In an example, the first signal is a single baseband transmission signal.

In an example, the first signals, for transmission, by each of the first and second antennas respectively are interleaved for each of the first and second antennas, such that the frequencies of the first signals of each of the first and second antennas are separate.

In an example, the transmitting device is a user equipment.

In an example, the apparatus is caused to perform: receiving, from a network, a configuration for transmissions during uplink gaps.

In an example, the apparatus is caused to perform: receiving, from a network, an activation for transmissions during uplink gaps.

In an example, the transmissions of the increased frequency signals from the antenna for are radar operations.

According to an aspect, there is provided an apparatus for a receiving device comprising: one or more processors, and memory storing instructions that, when executed by the one or more processors, cause the apparatus to perform: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have different frequencies; and providing the first and the second reception signals to a first and a second analogue-to-digital converter respectively, for further signal processing.

According to an aspect, there is provided an apparatus for a receiving device comprising: one or more processors, and memory storing instructions that, when executed by the one or more processors, cause the apparatus to perform: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have the same frequencies; and providing the first and the second reception signals to a first analogue-to-digital converter, for further signal processing.

According to an aspect, there is provided an apparatus for a transceiving device, the apparatus comprising: a digital-to-analogue converter; a first and a second up-converter circuit; a first and a second local oscillator; a first and a second antenna; a first and a second down-converter circuit; a first and a second analogue-to-digital converter; wherein the first up-converter circuit and the first down-converter circuit are both connected to the first local oscillator, wherein the second up-converter circuit and the second down-converter circuit are both connected to the second local oscillator, wherein the first and the second local oscillators are configured to generate different frequency signals from each other, wherein each of the first and the second up-converter circuits are configured to: obtain a first signal for transmission; increase the frequency of the first signal using the first and the second local oscillators respectively; and provide the increased frequency first signal to the first and the second antennas respectively, for transmission; wherein each of the first and the second down-converter circuits are configured to: receive a second signal via the first and second antenna respectively; decrease the frequency of the second signal using the first and the second local oscillators respectively; and provide the decreased frequency second signal to the first and the second analogue to digital converters respectively, for further signal processing.

In an example, the first and second local oscillators are separate components.

In an example, each of the first and the second up-converter circuits are configured to obtain the first signal for transmission and provide the increased frequency first signal for transmission during an uplink gap time slot.

In an example, the frequency generated by each of the first and second local oscillators is selected using: block frequencies that are offset within an available bandwidth, or a subcarrier offset between the first and second local oscillators.

In an example, i) the first up-converter circuit, ii) the first local oscillator, and ii) the first antenna, are comprised within a first radio frequency chain.

In an example, i) the second up-converter circuit, ii) the second local oscillator, and ii) the second antenna, are comprised within a second radio frequency chain.

In an example, the apparatus comprises three or more radio frequency chains, each radio frequency chain comprising an up-converter circuit, a local oscillator, and an antenna,

wherein each frequency of signals generated by each local oscillator in the three or more radio frequency chains are different from each other.

In an example, the apparatus comprises: a digital-to-analogue converter configured to provide the first signal for transmission.

In an example, the digital-to-analogue converter is connected to both the first and the second antennas via the first and the second up-converter circuitry respectively.

In an example, the first up-converter circuit comprises a first mixer and a first power amplifier, and the second up-converter circuit comprises a second mixer and a second power amplifier.

In an example, at least one of the first and second local oscillators comprises a phase-locked loop.

In an example, each of the first and second antennas are part of a respective antenna panel, each antenna panel comprising a plurality of antennas.

In an example, the first signal is a single baseband transmission signal.

In an example, the first signals, for transmission, by each of the first and second antennas respectively are interleaved for each of the first and second antennas, such that the frequencies of the first signals of each of the first and second antennas are separate.

In an example, the transmitting device is a user equipment.

In an example, the transmitting device is configured to perform the steps for transmission during an uplink gap time slot.

In an example, the transmitting device comprises means for receiving, from a network, a configuration for transmissions during uplink gaps.

In an example, the transmitting device comprises means for receiving, from a network, an activation for transmissions during uplink gaps.

In an example, the transmissions of the increased frequency signals from the antenna for are radar operations.

In an example, the apparatus comprises: a first and a second filter, wherein the first filter is connected to first up-converter circuit, and the second filter is connected to the second up-converted circuit.

In an example, the second local oscillator is configured to generate a frequency that is determined using the frequency generated by the first local oscillator and a frequency offset that is dependent on a number of antennas of the apparatus.

In an example, the first and second local oscillators are separate components.

In an example, the frequency generated by each of the first and second local oscillators is selected using: block frequencies that are offset within an available bandwidth, or a subcarrier offset between the first and second local oscillators.

In an example, i) the first down-converter circuit, ii) the first local oscillator, and ii) the first antenna, are comprised within a first radio frequency chain.

In an example, i) the second down-converter circuit, ii) the second local oscillator, and ii) the second antenna, are comprised within a second radio frequency chain.

In an example, the apparatus comprises three or more radio frequency chains, each radio frequency chain comprising a down-converter circuit, a local oscillator, and an antenna, wherein each frequency of signals generated by each local oscillator in the three or more radio frequency chains are different from each other.

In an example, the first down-converter circuit comprises a first mixer and a first power amplifier, and the second down-converter circuit comprises a second mixer and a second power amplifier.

In an example, at least one of the first and second local oscillators comprises a phase-locked loop.

In an example, each of the first and second antennas are part of a respective antenna panel, each antenna panel comprising a plurality of antennas.

In an example, the receiving device is a user equipment.

In an example, the receiving device is configured to perform the steps for reception during a downlink gap time slot.

In an example, the receiving device comprises means for receiving, from a network, a configuration for receptions during downlink gaps.

According to an aspect, there is provided an apparatus for a transmitting device, the apparatus comprising: means for obtaining a first signal for transmission; means for increasing, at a first transmit chain, the frequency of the first signal using a first frequency signal, to provide a first transmission signal; means for increasing, at a second transmit chain, the frequency of the first signal using a second frequency signal, to provide a second transmission signal, wherein the first frequency signal and the second frequency signal have different frequencies; and means for transmitting the first and the second transmission signals from the transmitting device, via a first and a second antenna respectively.

In an example, the apparatus comprises means for receiving a configuration to perform transmissions during uplink gap slots.

In an example, the transmitting is performed during an uplink gap slot.

According to an aspect, there is provided an apparatus for a transmitting device, the apparatus comprising: means for receiving a configuration for transmissions during uplink gap slots, wherein the configuration comprises at least one uplink gap slot that the transmitting device is permitted to transmit in; means for obtaining a first signal; means for increasing, at a first transmit chain of the transmission device, the frequency of the first signal using a first frequency signal, to provide a first transmission signal; means for increasing, at a second transmit chain of the transmission device, the frequency of the first signal using a second frequency signal, to provide a second transmission signal, wherein the first frequency signal and the second frequency signal have different frequencies; and means for, during the at least one uplink gap slot, transmitting the first and the second transmission signals, simultaneously, from the transmitting device.

According to an aspect, there is provided an apparatus for a receiving device, the apparatus comprising: means for receiving a first signal at a first and a second antenna respectively, the first signal being a radio frequency signal; means for decreasing, at a first receive chain, the frequency of the first signal using a first frequency signal, to provide a first reception signal; means for decreasing, at a second receive chain, the frequency of the first signal using a second frequency signal, to provide a second reception signal, wherein the first frequency signal and the second frequency signal have different frequencies; and means for providing the first and the second reception signals to a first and a second analogue-to-digital converter respectively, for further signal processing.

In an example, the apparatus comprises means for receiving a configuration to perform receptions during downlink gap slots.

In an example, the receiving is performed during a downlink gap slot.

According to an aspect, there is provided a computer program comprising computer executable instructions which when run on one or more processors perform: obtaining, at a first and a second transmit chain of the transmitting device, a first signal for transmission, increasing, at the first transmit chain, the frequency of the first signal using a first frequency signal, to provide a first transmission signal; increasing, at the second transmit chain, the frequency of the first signal using a second frequency signal, to provide a second transmission signal, wherein the first frequency signal and the second frequency signal have different frequencies; and transmitting the first and the second transmission signals from the transmitting device, via a first and a second antenna respectively.

According to an aspect, there is provided a computer program comprising computer executable instructions which when run on one or more processors perform: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have different frequencies; and providing the first and the second reception signals to a first and a second analogue-to-digital converter respectively, for further signal processing.

According to an aspect, there is provided a computer program comprising computer executable instructions which when run on one or more processors perform: receiving, at a first and a second receive chain of the receiving device, a first signal via a first and a second antenna respectively; decreasing, at the first receive chain, the frequency of the first signal using a first frequency signal, to provide a first reception signal; decreasing, at the second receive chain, the frequency of the first signal using a second frequency signal, to provide a second reception signal, wherein the first frequency signal and the second frequency signal have the same frequencies; and providing the first and the second reception signals to a first analogue-to-digital converter, for further signal processing.

A computer product stored on a medium may cause an apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

List of abbreviations:

| | |
|---|---|
| ADC: | Analogue-to-Digital Converter |
| AF: | Application Function |
| AMF: | Access Management Function |
| AN: | Access Network |
| BS: | Base Station |
| CN: | Core Network |
| DAC: | Digital-to-Analogue Converter |
| DL: | Downlink |
| eNB: | eNodeB |
| gNB: | gNodeB |
| HPF: | High-Pass Filter |
| IF: | Intermediate Frequency |
| IIoT: | Industrial Internet of Things |
| LO: | Local Oscillator |
| LPF: | Low-Pass Filter |
| LTE: | Long Term Evolution |
| NEF: | Network Exposure Function |
| NG-RAN: | Next Generation Radio Access Network |
| NF: | Network Function |
| NR: | New Radio |
| NRF: | Network Repository Function |
| NW: | Network |
| MPE: | Maximum Permissible Exposure |
| MS: | Mobile Station |
| PCF | Policy Control Function |
| P-MPR: | Power-Maximum Power Reduction |
| PLL: | Phase-Locked Loop |
| RAN: | Radio Access Network |
| RF: | Radio Frequency |
| SMF: | Session Management Function |
| UE: | User Equipment |
| UDR: | Unified Data Repository |
| UDM: | Unified Data Management |
| UL: | Uplink |

| UPF: | User Plane Function |
| 3GPP: | 3rd Generation Partnership Project |
| 5G: | 5th Generation |
| 5GC: | 5G Core network |
| 5G-AN: | 5G Radio Access Network |
| 5GS: | 5G System |

Description of Figures

Embodiments will now be described, by way of example only, with reference to the accompanying Figures in which:

Figure 1 shows a schematic representation of a 5G system;
Figure 2a shows a schematic representation of a control apparatus;
Figure 2b shows a schematic representation of a terminal;
Figure 3 shows a schematic representation of uplink gap periodicity;
Figure 4 shows a schematic representation of a radio frequency transmitter according to known systems;
Figure 5 shows a schematic representation of a radio frequency transmitter according to examples of the present disclosure;
Figure 6 shows a schematic representation of frequencies generated by local oscillators of the radio frequency transmitter according to examples of the present disclosure;
Figure 7 shows another schematic representation of a radio frequency transmitter in a first implementation, according to examples of the present disclosure;
Figure 8 shows another schematic representation of a radio frequency transmitter in a second implementation, according to examples of the present disclosure;
Figure 9 shows a schematic representation of a device 900 with two antenna panels configured for radar operations;
Figure 10 shows a schematic representation of a radio frequency receiver with two analogue to digital converters, according to examples;
Figure 11 shows a detailed schematic representation of one of the antennas and phase shifters of Figure 10;
Figure 12 shows another schematic representation of a radio frequency receiver with filters in the receive chain, according to examples;
Figure 13 shows a schematic representation of a radio frequency receiver with a single analogue to digital converter, according to examples;
Figure 14 shows a graphical representation of frequencies generated by local oscillators, according to examples;
Figure 15 shows a schematic representation of a transceiver with a single digital to analogue converter and multiple analogue to digital converters, according to examples;
Figure 16 shows a schematic representation of a transceiver with a single digital to analogue converter and a single analogue to digital converter, according to examples;
Figure 17 shows a graphical example of local oscillator offsetting in an interleaved manner being used by the transceiver of Figure 15 or Figure 16;
Figure 18 shows another schematic representation of a transceiver with a single digital to analogue converter and a single analogue to digital converter, according to examples;
Figure 19 shows a schematic representation of a transmitter with two antenna panels, wherein local oscillators are offset by one sub-carrier spacing, according to examples;
Figure 20 shows a graphical representation of IQ signals for IFDMA vs nulled-OFDM;
Figure 21 shows an example method flow diagram performed by a transmitting device;
Figure 22 shows an example method flow diagram performed by a receiving device; and
Figure 23 shows a schematic representation of a non-volatile memory medium storing instructions which when executed by a processor allow a processor to perform one or more of the steps of the method of Figure 21 or Figure 22.

Detailed description

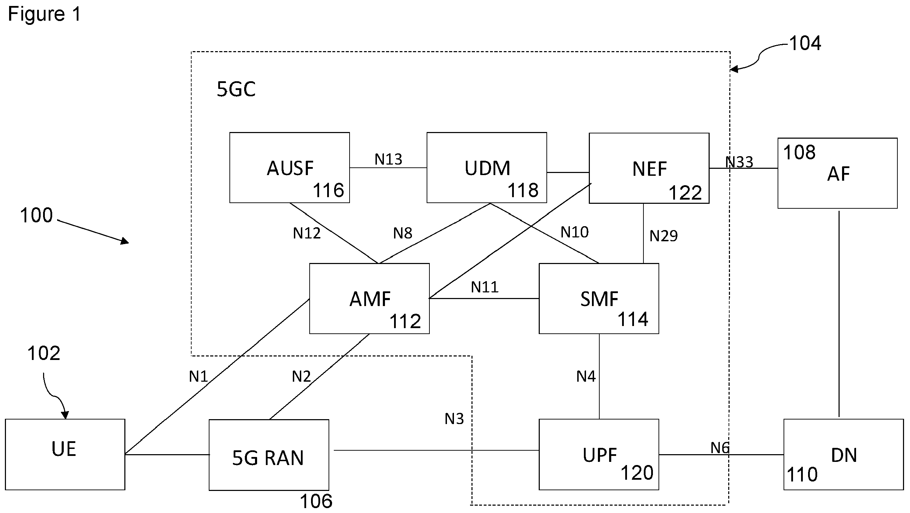

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point.

A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices. Before explaining in detail the examples of disclose, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS) 100. The 5GS may comprises a device 102 such as user equipment or terminal, a 5G access network (5G-AN) 106, a 5G core network (5GC) 104, one or more network functions (NF), one or more application function (AF) 108 and one or more data networks (DN) 110.

The 5G-AN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G and other 3GPP standards.

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

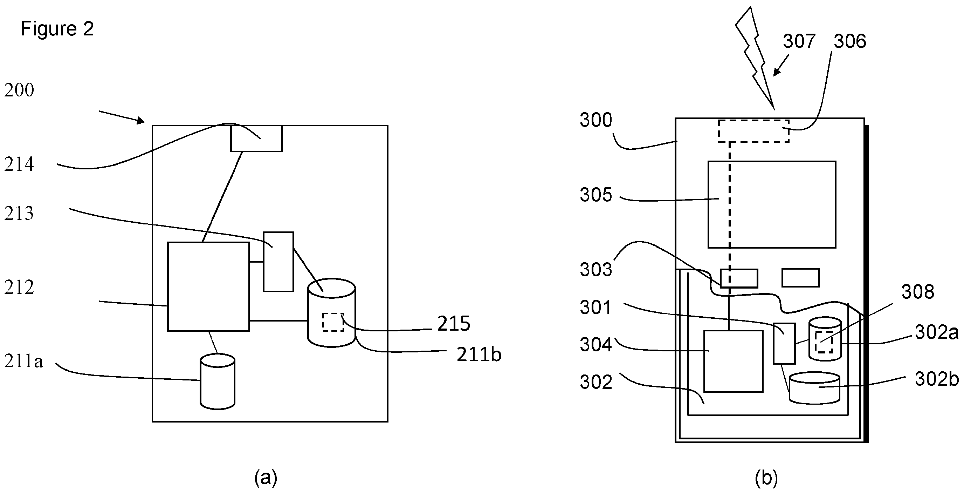

Figure 2a illustrates an example of a control apparatus 200 for controlling a function of the 5G-AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

Figure 2b illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

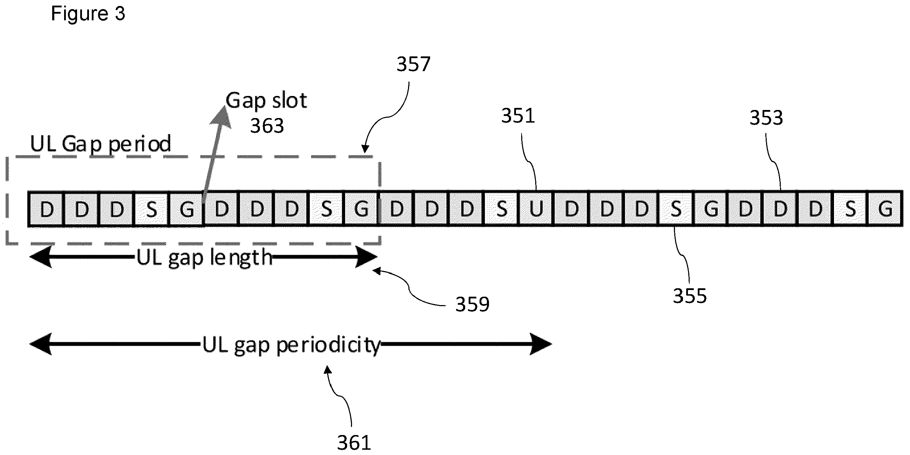

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Demands for an improved and expanded mobile broadband connectivity is growing, which has led to wireless communication technologies advancing from the LTE technology to a next generation new radio (NR) technology (also known as 5G). Techniques for expanding connectivity have been developed so that frequency operation range is extended to higher frequencies. This is because the lower frequencies are becoming overly busy and over-crowded. Millimetre wave (mmWave) frequency bands occur between ~30 gigahertz (GHz) to ~300 GHz and they can provide a large bandwidth for high data rate communications. However, mmWave frequency bands often have a higher path-loss when being compared to lower frequency bands which are often used in wireless communication systems more conventionally.

Base stations (gNBs) and user equipments (UE) may use beamforming to form directional links for communications, in order to try and overcome the higher path loss of the higher frequencies. Practical application of beamforming in mmWave systems needs to overcome a number of constraints from regulatory perspectives. Some regulatory agencies impose maximum permissible exposure (MPE) constraints on transmitters. MPE constraints may be specified in terms of, for example, short-term temporal averaging of radiated power, medium-term temporal averaging of radiated power, local-spatial averaging of radiated power, and/or medium-spatial averaging of radiated power. MPE constraints can prevent operating conditions that may be hazardous, ensure optimal health of users, reduce electromagnetic pollution, and reduce noise/interference from mmWave transmissions.

In order to confirm to particular constraints, for mmWave, a UE may determine and conform to MPE constraints autonomously or locally at the UE.

Applications on UEs such as radar may benefit from simultaneous Tx operation on multi-panel UEs (MPUEs). Radar operation may be long range (i.e. far field of antenna array) for environment sensing, night vision application, etc. or short range for MPE detection.

Regarding long-range radar, automotive radar is a use case and is investigated in mmWave extended reality applications (e.g. virtual reality glasses). Regarding short-range radar, MPE is a potential use case. Since MPE is a regulatory limit dictating an upper limit on the allowed equivalent isotopically radiated power (EIRP) when a user is in near vicinity of the antenna, UEs will be equipped with proximity sensors to detect MPE events. Typical body sensing techniques may include infra-red sensors, capacitive sensors and radars. On UEs, embedding the radar capability into the mmWave array is a promising technique, as it provides clear benefits in real estate and cost compared to other available methods. If within a certain distance, there is no human body on the communication path between the UE and the gNB, the UE can increase its TX power, which may have a significant impact on UL coverage, UL throughput and in some cases even avoid link failures.

While many of the examples described below are related to radar as an application for mmWave UEs, the principles described herein are equally applicable for other applications such as: multi-TRP transmission, beam alignment for sidelink, D2X, vehicular-to-vehicular communications, internet of things reduced capability, and unlicensed spectrum or 6G.

A UE or other mobile device may have to measure the characteristics of signals of neighbouring cells and other carrier components. An RF module of the UE is used in order to perform these measurements. However, many UEs have a single RF module as this reduces the manufacturing cost and form factor. Therefore, for these UE devices, the measurements, as well as any transmission and reception of data will be performed using the single RF module.

UEs can measure signals of a neighbour cell that is transmitting on the same frequency as the UE easily, while also simultaneously transmitting and receiving data from the serving cell. However, when measuring a cell operating at a different frequency (i.e. inter frequency neighbours) or another radio access technology (RAT), the UE has to suspend any transmissions or receptions with the serving cell. During this time of suspension the UE is able to tune the RF module to the configured frequencies (to perform the measurements) and resume connection with serving cell after an allotted time.

The time duration during which a UE suspends it communication (Tx/Rx) with the serving cell known as a gap, or gap slot. In some examples, it may be known as a measurement gap or measurement window.

UL gaps may be defined for, for example, radar operation to detect user presence, or for internal UE calibration. UL gaps may have length and periodicity as shown in Figure 3.

Figure 3 shows a schematic representation of uplink gap periodicity. In the representation, there are different time slots, for different types of communications. The slots labelled 'U' are uplink slots 351. The slots labelled 'D' are downlink slots 353. The slots labelled 'S' are special slots 355. An uplink gap length 359 is a time length that is defined for a number of slots. In this example, the uplink gap length comprises 'DDDSGDDDSG', wherein 'G' is a UL gap slot 363. During the time of the UL gap slot 363 the UE may perform, for example, radar operations. The UL gap period comprises all of the slots within the UL gap length 359. An UL gap periodicity 361 defines the time period whereby the pattern of slot repeats. In this examples, each period 361 comprises 'DDDSGDDDSGDDDSU'.

Dedicated UL gaps, controlled by the network, may ensure the reliability of such Tx measurements and calibration (i.e. periodicity and number of samples for radar accuracy for example). Furthermore, the introduction of UL gaps measurement may give more flexibility regarding TX power selection, used bandwidth, concurrent measurements and dedicated Tx signals. Nonetheless, UL gaps represent an UL throughput loss since some of the UL slots are dedicated to radar measurements instead of PUSCH (i.e. transmitting data). It is therefore beneficial to minimize the number of gaps. For MPUEs, performing simultaneous Tx measurement is a clear benefit that will minimize the number of needed gaps. As mentioned above, some UE devices only have a single RF transmit chain (i.e. a single digital to analogue converter (DAC)). In these cases, it can be difficult to identify individual radar reflected signals on multiple UE antenna panels that are not located together (i.e. non-co-located antenna panels). When a signal is received on multiple UE panels (and those UE panels share the Rx chain) it can be difficult to identify which panel is receiving the signal with highest power. An example of this can be, with the same radar stream, or with UE-UE communication.

MPE is a regulatory requirement. To increase power, a UE checks whether there is human body nearby. In some examples, the UE will check for human bodies if the power is increased beyond a level resulting in a power absorption of more than 1mW per cm2.To detect a human presence, many UEs use infra-red sensors, capacitive sensors, radar, for the detecting. Radar is an efficient option as it can reuse the mmWave array of the UE, thereby minimizing the space required in the UE for this component. Many hardware manufacturers do not want to include extra sensors or RF modules within UEs in order to save on cost and space. Instead, it has been suggested to use gap slots for MPE mitigation, rather than including the further sensors/RF modules.

It can be difficult to identify individual radar reflected signals on multiple non-co-located UE panels when the architecture comprises (only) 2 Rx chains (i.e. 2 ADCs) and 1 Tx chain (i.e. 1 DAC). It can be difficult to simultaneously perform radar measurements on multiple panels with such transmit and receive limitations.

Simultaneous radar utilization per antenna panel may be important to minimize UL throughput degradation resulting from UL gap scheduling, as previously described.

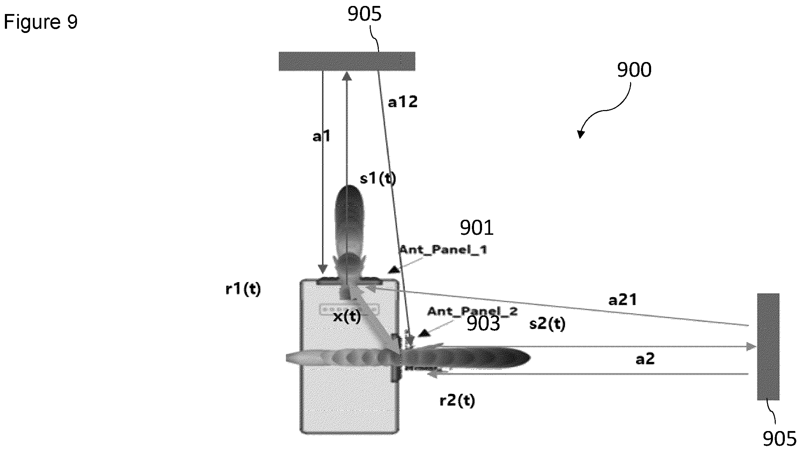

Sufficient isolation for multi-panel simultaneous radar capability between panel signals may be beneficial in order to distinguish the radar signal from each antenna panel. The equations 1 and 2 below represent the received signals at the radar receiver of each antenna panel, where 'r' (received signal), 'a' (reflected signal), 's' (transmitted signal) and 'x' (inter-panel coupling) are represented in Figure 9:

$$r1(t)= a1*s1(t) + x(t)*s2(t) + a21*s2(t)$$

$$r2(t)= a2*s2(t) + x(t)*s1(t) + a12*s1(t)$$

Figure 9 shows a schematic representation of a device 900 with two antenna panels configured for radar operations.

The device 900 comprises a first antenna panel 901 and a second antenna panel 903. The first antenna panel 901 receives a radar signal labelled r1(t). The second antenna panel 903 receives a radar signal labelled r2(t). Each antenna panel 901, 903 is configured to transmit signals, which may bounce off/reflect off nearby surfaces 905. As shown in Figure 9, the signals from the first antenna panel 901 interfere with the second antenna panel 903, which are labelled a12. The signals from the second antenna panel 903 interfere with the first antenna panel 901, which are labelled a21.

The noise/interference between the antenna panels 901, 903 may be caused by design limitations (e.g. sub-optimal RF isolation between the UE panels) and/or due to blocker effects and any other obstacles near the device.

One or more of the following examples aim to address one or more of the problems discussed above.

Examples may help to achieve UE simultaneous multi-panel transmission with a single DAC architecture. Furthermore, examples may help to deal with inter-antenna panel interference, and how to detect each antenna panel signal independently, for example, in a radar use case.

In examples, there is provided a transmitter with two RF chains, each RF chain comprising an up-converter, a local oscillator (LO), and an antenna panel. The transmitter uses a single baseband Tx signal but transmits two un-correlated radio frequency (RF) signals from each antenna panel. The two un-correlated RF signals are provided by offsetting the local oscillator frequency used in each up-converter, relative to each other. For a receiver that receives each transmitted signal from the antenna panels, the signal from each antenna panels is decoded such that the transmitted signals from each antenna panels can be identified by use of separate Rx RF chains with an orthogonal frequency-division multiplexing demodulator and decoder. This will be discussed in more detail below.

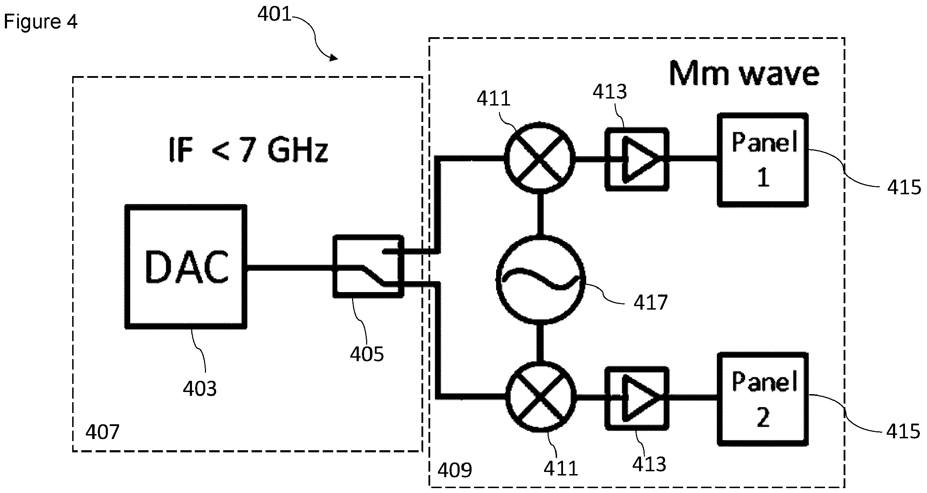

Figure 4 shows a schematic representation of a radio frequency transmitter according to known systems.

The transmitter 401 comprises a DAC 403 connected to a switch 405. The DAC 403 and the switch 405 form a first part 407 of the circuit. The first part 407 of the circuit may have intermediate frequencies (IF) below 7 GHz in some examples.

The transmitter 401 also comprises an RF front end 409. The signals transmitted by the RF front end 409, in this example, may be mmWave signals. The RF front end 409 comprises two RF chains, each RF chain comprising a separate mixer 411, power amplifier 413, and antenna 415. The antenna 415 may be part of an antenna panel that comprises a plurality of antenna.

The two mixers 411 of the RF chains share a single LO 417. In this way, both of the two mixers will receive the same frequency signal, to mix with the signal from the low-pass filter 405. Therefore, the two antennas 415 (of each RF chain) will transmit the same signal.

The transmitter 401 is configured to provide a single transmission signal to one of the antenna panels in each RF chain, using the switch 405. Said another way, the DAC 403 will be connected to one antenna panel 415 at one time.

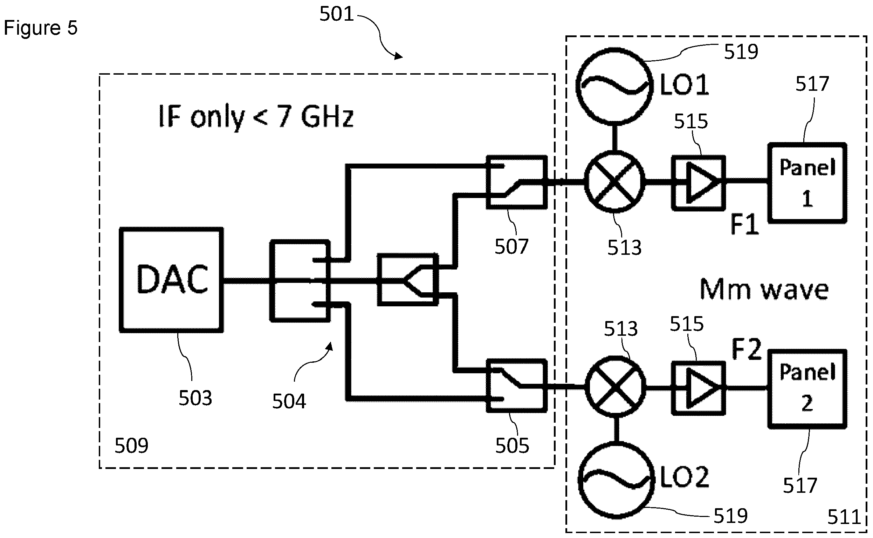

Figure 5 shows a schematic representation of a radio frequency transmitter according to an example.

The transmitter 501 comprises a DAC 503 connected to a first switch 505 and a second switch 507, via a multiplexer 504. The DAC 503, the multiplexer 504, the first switch 405, and the second switch 507 form a first part 509 of the circuit. The first part 509 of the circuit may have IFs below 7 GHz in some examples.

The transmitter 501 also comprises an RF front end 511. The signals transmitted by the RF front end 511, in this example, may be mmWave signals. The RF front end 511 comprises two RF chains, each RF chain comprising a separate mixer 513, power amplifier 515, and antenna 517. The antenna 517 may be part of an antenna panel that comprises a plurality of antenna.

Each of the RF chains comprise a local oscillator (LO) 519. In this way, each RF chain has a separate LO 519. For each RF chain, the mixer 513, the LO 519 and the power amplifier 515 form an up-converter circuit.

Each of the LOs 519 is configured/programmed to generate a different frequency signal from each other. A first of the LOs 519 will generate a first frequency and the second of the LOs 519 will generate a second frequency, wherein the first and second frequencies are different.

Each of the up-converter circuits are configured to: obtain a signal for transmission. The signal is provided by the first part 509 of the transmitter circuit. Each of the up-converter circuits are then configured to: increase the frequency of the signal using the respective local oscillators. Each of the up-converter circuits are then configured to: provide the increased frequency signal to the respective antenna for transmission.

In examples, the transmitter is configured to transmit during an uplink gap slot. In other examples, the transmitter is configured to transmit during time periods other than an uplink gap slot.

The configuration of Figure 5 means that a single DAC 503 (or IF signal) is connected simultaneously to two antenna 517 (panels), wherein each antenna 517 is connected to the up-converter with a separate local oscillator 519. The multiplexer 504 allows the signal from the DAC 503 to be provided to both RF chains at the same time.

The RF signals to be transmitted by each antenna 517 are obtained by offsetting the frequencies of the local oscillators 519 used for the up-converters, relative to each other. This means that the two transmitted RF signals are uncorrelated.

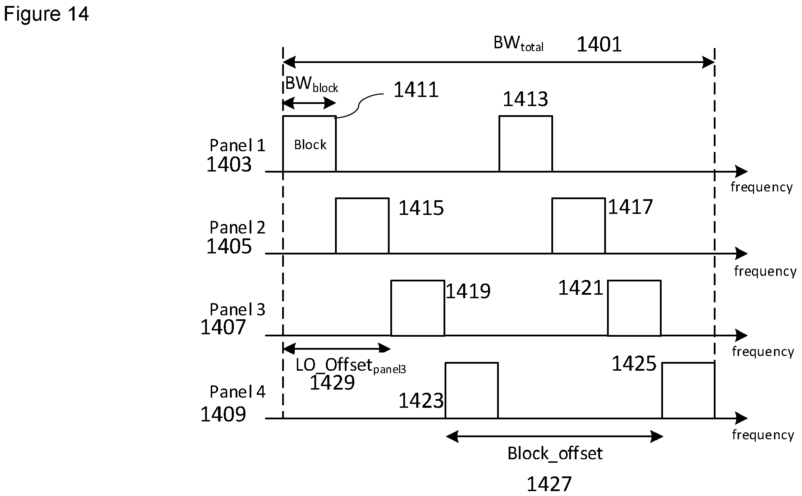

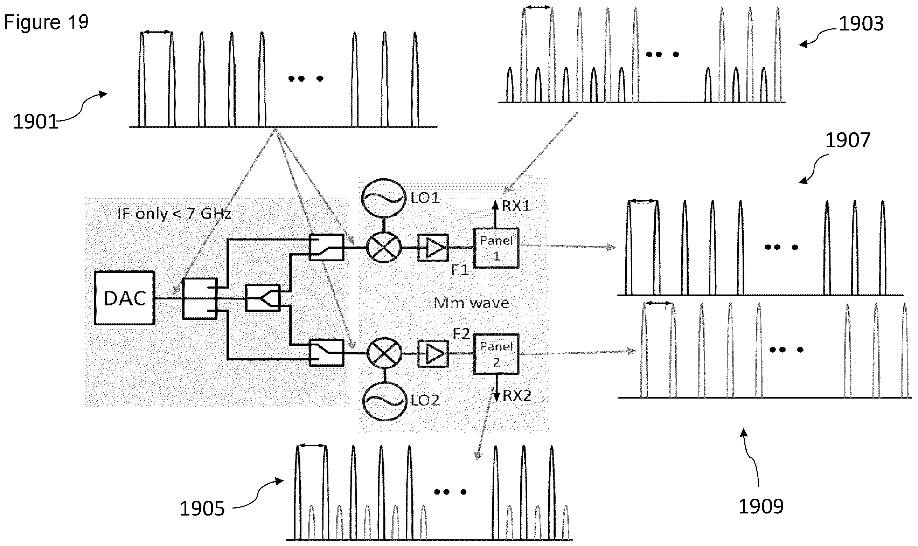

In examples, there are two methods of selecting the frequency offset between each LO 517. In a first example, a frequency block offset method is used, whereby from smaller frequency blocks up to half the available bandwidth (BW). This is described in more detail below. In particular alongside Figure 14. In a second example, a subcarrier offset method is used, whereby several subcarriers down to one subcarrier is used. This is described in more detail below. In particular alongside Figure 19.

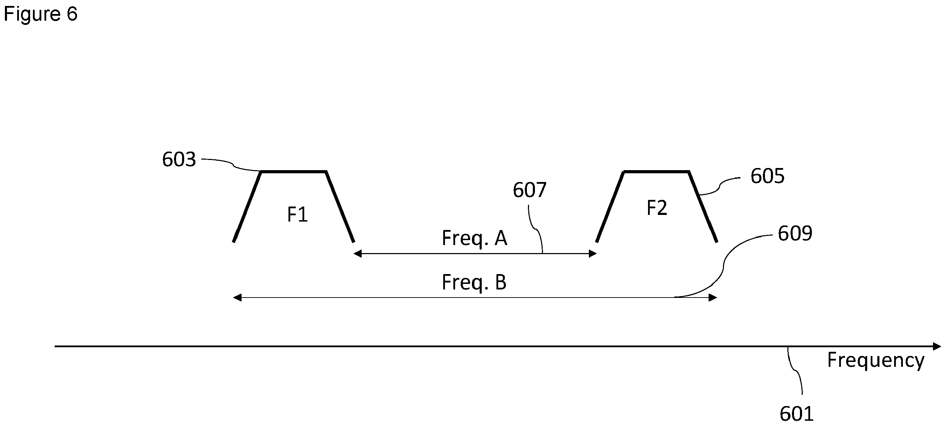

In some examples, the frequency generated by each LO 519 is selected between: one subcarrier spacing, and half the available bandwidth. For example, the subcarrier spacing is 120 kHz. For example, the available bandwidth may be 200 MHz. In other examples, the subcarrier spacing is higher or lower than 120 kHz. In other examples, the available bandwidth is higher or lower than 200 MHz. This is described in more detail in Figure 6.

The configuration of the transmitter 501 enables any receive circuitry (that can receive the transmitted signal) to demodulate and decode the signals simultaneously from the antenna. The receive circuitry is then able to distinguish between the different RF signals from each antenna 517. An example receiver may comprise 2 receive (Rx) chains. For example, two analogue-to-digital converters (ADCs).

The transmitter 501 may be comprised within a user equipment (UE). The UE may be configured to support UL gaps (as described previously). In some examples, the UE (that supports UL gaps) may be activated by the network, to utilise the UL gaps. For example, the UL gaps may be used for radar operations. The transmitter 501 of the UE may then use both antenna (panels) 517 simultaneously, during the UL gaps, for transmissions. For example, for transmission operations for radar.

It is submitted that this configuration for transmissions during UL gaps is also applicable to the other example transmitters, as described below.

In some other examples, there are more than two RF chains in the transmitter 501. In this example, there will be more than two antennas. In this example, each RF chain will have a separate LOs, wherein the signal generated by each LO will be different from each other.

Figure 6 shows a schematic representation of frequencies generated by local oscillators of the radio frequency transmitter according to examples.

Figure 6 includes an x-axis 601 which is the frequency generated by a local oscillator. The local oscillator may be included in the transmitter 501 of Figure 5.

A first frequency (F1) 603 is shown, which represents a frequency generated by a first local oscillator (LO1). A second frequency (F2) is shown, which represents a frequency generated by a second local oscillator (LO2).

A difference between F1 603 and F2 605 is shown as frequency A 607. A bandwidth of F1 603 and F2 605 is shown as frequency B 609. In some examples, frequency A 607 may be between 100-200 MHz or larger. In some examples, frequency B may be between 400-1200 MHz. It should be understood that these numbers are given as examples only.

Using F1 603 and F2 605, two separate carrier frequencies can be achieved using different LO settings/programming for each antenna. The LO settings/programming may be performed using phase-locked loop programming.

The frequency split may be performed by programming LO1 and LO2 such that the frequency separation between LO1 and LO2 is: F2-F1. The frequency separation and bandwidth may be selected according to existing rules such that inherent receive adjacent channel rejection at baseband is applicable. This will be described in more detail below.

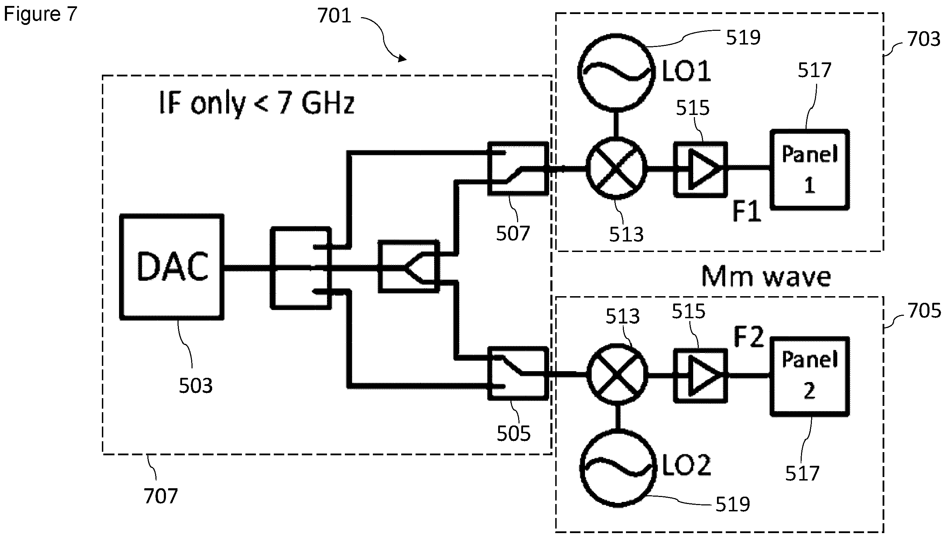

Figure 7 shows a schematic representation of a radio frequency transmitter in a first implementation, according to examples.

The transmitter 701 of Figure 7 is similar to the transmitter 501 of Figure 5. The components that are the same in both Figure 5 and Figure 7 have the same reference numbers. The transmitter 701 may have in the same configuration as transmitter 501, in some examples.

In this example implementation, the mixer 513, LO 519, PA 515 and antenna 517 (of the first RF chain) form a first mmWave module 703. The mixer 513, LO 519, PA 515 and antenna 517 (of the second RF chain) form a second mmWave module 705. In this example implementation, there is a common transmitter 707 section of the circuit. The common transmitter 707 is connected to both the first 703 and second 705 mmWave modules.

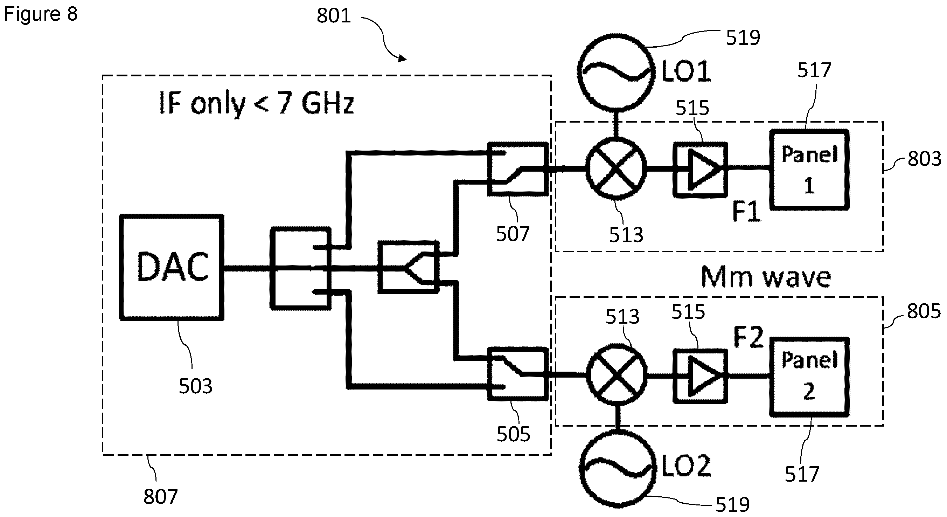

Figure 8 shows another schematic representation of a radio frequency transmitter in a second implementation, according to examples.

The transmitter 801 of Figure 8 is similar to the transmitter 501 of Figure 5. The components that are the same in both Figure 5 and Figure 8 have the same reference numbers. The transmitter 801 may have in the same configuration as transmitter 501, in some examples.

In this example implementation, the mixer 513, PA 519 and antenna 517 (of the first RF chain) form a first mmWave module 803. The mixer 513, PA 519 and antenna 517 (of the second RF chain) form a second mmWave module 805. In this example implementation, there is a common transmitter 807 section of the circuit. The common transmitter 807 is connected to both the first 803 and second 805 mmWave modules.

Therefore, the LO may be i) Integrated in each module (Figure 7), or ii) One per module but not integrated and routed (Figure 8). In both cases, the control of the LO may be centralized.

In comparison to Figure 7, the transmitter 801 of Figure 8 does not include the local oscillators 519 in the mmWave modules 803, 805. In Figure 8, the local oscillator routing is short, as one local oscillator is provided per mmWave module. The local oscillator may be located close to the mixer. In Figure 7, as the LO is provided within the mmWave module this may be a practical solution as mmWave routing can be difficult task, meaning that the LO within the mmWave module is less lossy and more practical.

In addition to the re-designed transmission branch enabling simultaneous radar signals from multiple panels with a single DAC, a receive chain is also provided to simultaneously decode on multiple panels with only 2 analogue to digital converters (ADCs).

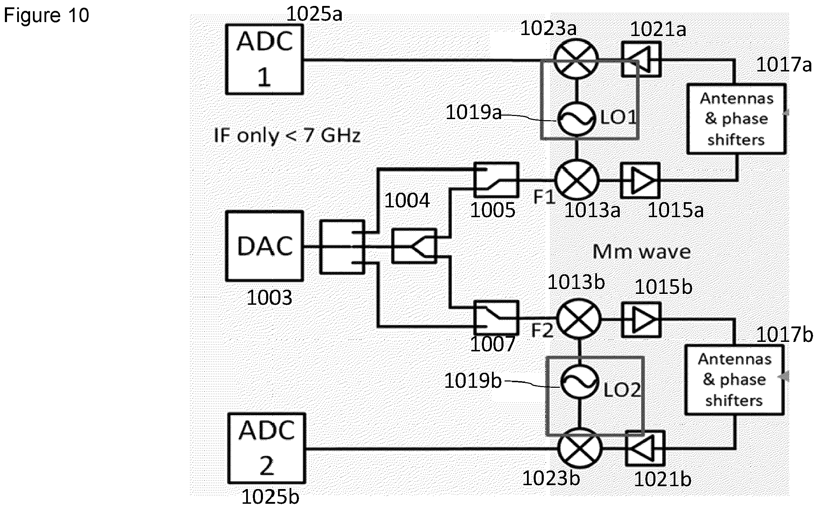

Figure 10 shows a schematic representation of a radio frequency receiver with two analogue to digital converters (ADCs), according to examples.

In Figure 10, the architecture of the receiver is shown in combination with the transmitter chain.

A DAC 1003 is connected to a first switch 1005 and a second switch 1007, via a multiplexer 1004. The DAC 1003, the multiplexer 1004, the first switch 1005, and second switch 1007 form a first part 1009 of the circuit. The first part 1009 of the circuit may have IFs below 7 GHz in some examples.

An RF front end 1011 comprises two Tx RF chains. A first Tx RF chain comprises a mixer 1013a, a power amplifier 1015a, and an antenna and phase shifter panel 1017a. A second Tx RF chain comprises a mixer 1013b, a power amplifier 1015b, and an antenna and phase shifter panel 1017b.

The first Tx RF chain comprises a local oscillator (LO) 1019a. The second Tx RF chain comprises a local oscillator (LO) 1019b. In this way, each Tx RF chain has a separate LO 519.

A first Rx RF chain is connected to the first Tx RF chain. The first Rx RF chain comprises the antenna and phase shifter panel 1017a, a further power amplifier 1021a, and a further mixer 1023a. The first Rx RF chain shares the LO 1019a with the first Tx RF chain. The first Rx RF chain is then connected to a first ADC 1025a.

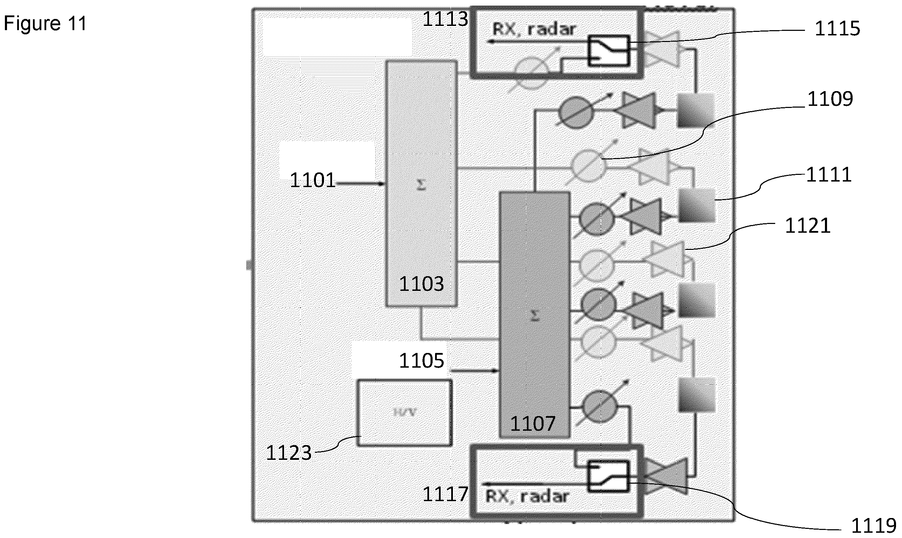

The second Rx RF chain comprises the antenna and phase shifter panel 1017b, a further power amplifier 1021b, and a further mixer 1023b. The second Rx RF chain shares the LO 1019b with the first Tx RF chain. The second Rx RF chain is then connected to a second ADC 1025b. The antenna and phase shifter panels 1017a, 1017b are shown in more detail in Figure 11.

Figure 10 shows the Rx side circuitry in addition to the circuitry of the Tx side. It should be appreciated that, in some example, the only the Rx side circuitry may be provided in an apparatus/device (i.e. the Tx circuitry is not provided). The Tx and the Rx may be separate entities in some examples. The Tx and the Rx may be combined in some examples.

Figure 11 shows a detailed schematic representation of one of the antennas and phase shifters of Figure 10.

A transmission signal 1101 is provided into a summation component 1103. A further transmission signal 1105 is provided into a further summation component 1107. There is provided a plurality of a phase shifters 1109. There is also provided a plurality of antennas 1111. Combined PAs/LNAs 1121 are provided between the plurality of antennas 1111 and the plurality of a phase shifters 1109, in series.

A first receive section 1113 comprises a switch 1115. The switch 1115 connects the Rx RF chain of Figure 10 to either the summation component 1103 or the plurality of antennas 1111 and plurality of phase shifter 1109. A second receive section 1117 comprises a further switch 1119. The further switch 1119 connects the Rx RF chain of Figure 10 to either the further summation component 1107 or the plurality of antennas 1111 and plurality of phase shifter 1109.

There is provided a polarization control block (H/V) 1123. The H/V 1122 may be provided per patch element in some examples.

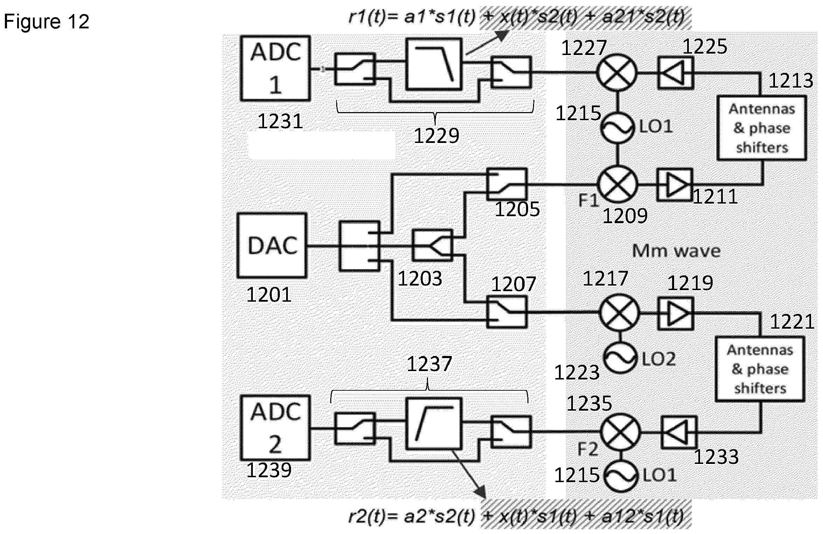

Figure 12 shows another schematic representation of a radio frequency receiver with filters in the receive chain, according to examples.

In cases whereby the dynamic range of the ADC may not be able to cope with the frequency separation of the LOs, the architecture of the receiver includes a filter before the ADCs, as seen in Figure 12. This may suppress the unwanted signal and noise more efficiently since a filter performs better at IF frequencies than in mmWaves. Said another way, there is an improved selectivity due to smaller absolute frequency separation between pass-band and stop-band. The addition of filters may have further advantages as the filters may allow a relaxation of the ADC requirements. This may lead to a reduced cost and power consumption of the ADCs.

As shown in Figure 12, there is a DAC 1201 connected to a multiplexer 1203. The multiplexer is connected to a first switch 1205 and to a second switch 1207. The first switch 1205 is connected to a first Tx mixer 1209. The first Tx mixer 1209 is connected to a first Tx power amplifier (PA) 1211. The first Tx power amplifier 1211 is connected to a first antenna 1213. The first antenna 1213 may be comprised in an antenna and phase shifters panel. The first Tx mixer 1209 is connected to a first local oscillator (LO) 1215. The first LO 1215 is configured to generate a signal with a first frequency.

The second switch 1207 is connected to a second Tx mixer 1217. The second Tx mixer 1217 is connected to a second Tx PA 1219. The second Tx PA 1219 is connected to a second antenna 1221. The second antenna 1221 may be comprised in an antenna and phase shifters panel. The second Tx mixer 1217 is connected to a second LO 1223. The second LO 1223 is configured to generate a signal with a second frequency. The first frequency generated by the first LO 1215 is offset (different) from the second frequency generated by the second LO 1223.

The first antenna 1213 is connected to a first Rx LNA 1225. The first Rx LNA 1225 is connected to a first Rx mixer 1227. The first Rx mixer 1227 is connected to the first LO 1215. In this way, the first Tx mixer 1209 and the first Rx mixer 1227 share the first LO 1215. The first Rx mixer 1227 is connected to a first filter 1229. The first filter 1229 is connected to a first ADC 1231. Any suitable filter may be used.

The second antenna 1221 is connected to a second Rx LNA 1233. The second Rx LNA 1233 is connected to a second Rx mixer 1235. The second Rx mixer 1235 is connected to the first LO 1215. In this way, the first Tx mixer 1209, the first Rx mixer 1227, and the second Rx mixer 1235 share the first LO 1215. For the second Rx mixer 1235, in some examples, a separate LO is provided that generates the same frequency signal as the first LO 1215. In other examples, the same first LO 1215 is connected to first Tx mixer 1209, the first Rx mixer 1227, and the second Rx mixer 1235. The second Rx mixer 1235 is connected to a second filter 1237. The second filter 1237 is connected to a second ADC 1239. Any suitable filter may be used.

The filters 1231, 1239 inserted in the receive chains improve the receiver dynamic range by the amount of isolation achieved in the filters. The filters are configured to remove unwanted signals. The filters may clear noise and interference, from equations 1 and 2, x(t)*s2(t) + a21*s2(t) of r1(t) and clear x(t)*s1(t) + a12*s1(t) of r2(t), as shown below:

$$r1(t) = a1 * s1(t)$$

$$r2(t) = a2 * s2(t)$$

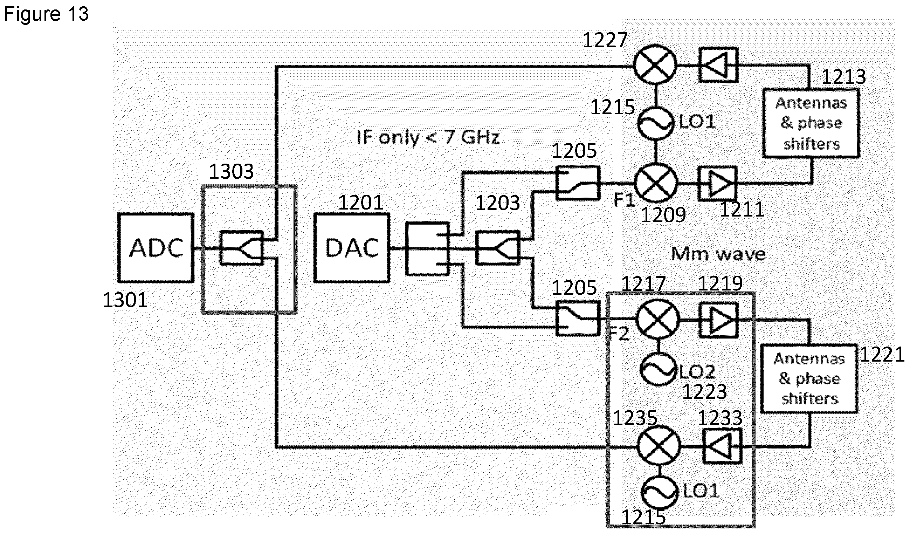

Figure 13 shows a schematic representation of a radio frequency receiver with a single analogue to digital converter, according to examples.

The circuitry of Figure 13 shares many of the same components as Figure 12. In Figure 13, the Rx circuitry is configured to reduce the number of ADCs (from 2 to 1). This may reduce the cost of device, in for example, reduced capability (RedCap) applications.

In comparison to Figure 12, in Figure 13 the first Rx mixer 1227 is connected to a single ADC 1301. The second Rx mixer 1235 is also connected to the single ADC. Both the first and second Rx mixers 1227, 1235 are connected to the single ADC 1301 via a multiplexer 1303. The first LO 1215 is used by both Rx chains.

In Figure 13, there are no filters provided in series before the single ADC 1301. In other examples, one or more filters are provided, in series, before the single ADC 1301.

Figure 14 shows a graphical representation of frequencies generated by local oscillators, according to examples.

As discussed in Figure 5, the separate LOs have offset frequencies. Offsetting the LOs may be done is multiple different ways. In some examples, interleaving the signals in frequency blocks is performed. The Tx signal from the baseband (from a DAC) may be generated in a way that allows to interleave the RF signals from each antenna panel. This may be done by ensuring that there is sufficient bandwidth left for the interleaved RF signals. For example, for an OFDM radar application, a widespread radar signal may be preferred. Therefore, in some examples, a Tx signal is constructed with two blocks of maximum frequency separation, as show in Figure 14.

In the example of Figure 14, the frequencies are shown for four separate antenna panels (i.e. four different LOs). In other examples, the frequencies are selected for more or less than four antenna panels. The frequencies shown are the frequencies generated by the LOs associated with each panel.

There is illustrated a total bandwidth (BW) 1401. The total BW 1401 is shared between a first (antenna) panel 1403, a second panel 1405, a third panel 1407, and a fourth panel 1409. The first panel 1403 is configured with a first BW block 1411, and a second BW block 1413. The second panel 1405 has a third BW block 1415 and a fourth BW block 1417. The third panel 1407 has a fifth BW block 1419 and a sixth BW block 1421. The fourth panel 1409 has a seventh BW block 1423 and an eighth BW block 1425. The difference between two blocks of frequencies generated by a panel is a block offset 1427. The LO offset for the third panel 1407 is labelled 1429.

The frequencies of the BW blocks 1411, 1413, 1415, 1417, 1419, 1421, 1423, 1425 are all offset from each other, such that all of the frequencies are different. This may be referred to as interleaving.

The block interleaving is such that there are two maximum separated blocks for each panel. The interleaved TX signal uses the maximum allocated bandwidth for the transmission.

The bandwidth of each block ($BW_{block}$) depends on the number of panels ($N_{panel}$) and the allocated bandwidth ($BW_{total}$) and can be calculated as shown in the equation below:

$$BW_{block} = \frac{BW_{total}}{2 \cdot N_{panel}}$$

Since the transmitted RF signal of each panel is shifted by $BW_{block}$ the LO offset for panel number # ($LO\_Offset_{panel\#}$) can be calculated as:

$$LO\_Offset_{panel\#} = BW_{block} \cdot panel\#$$

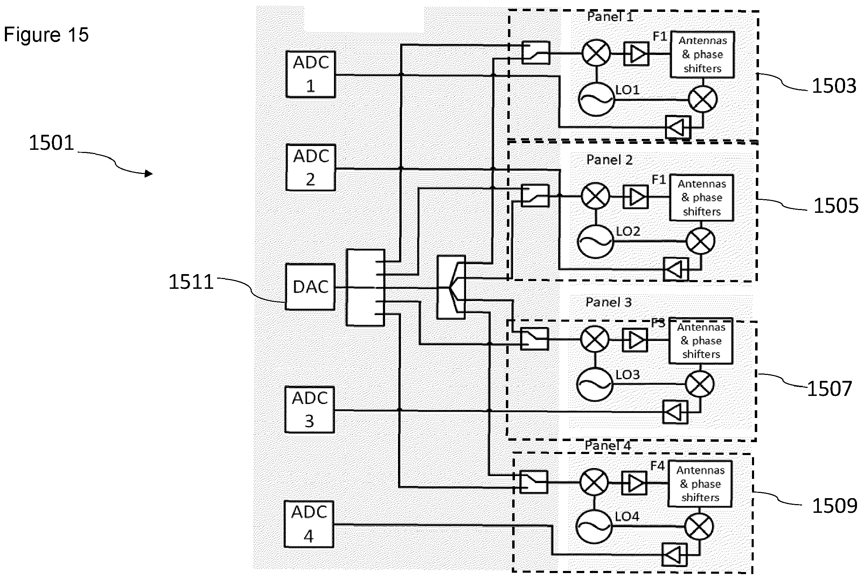

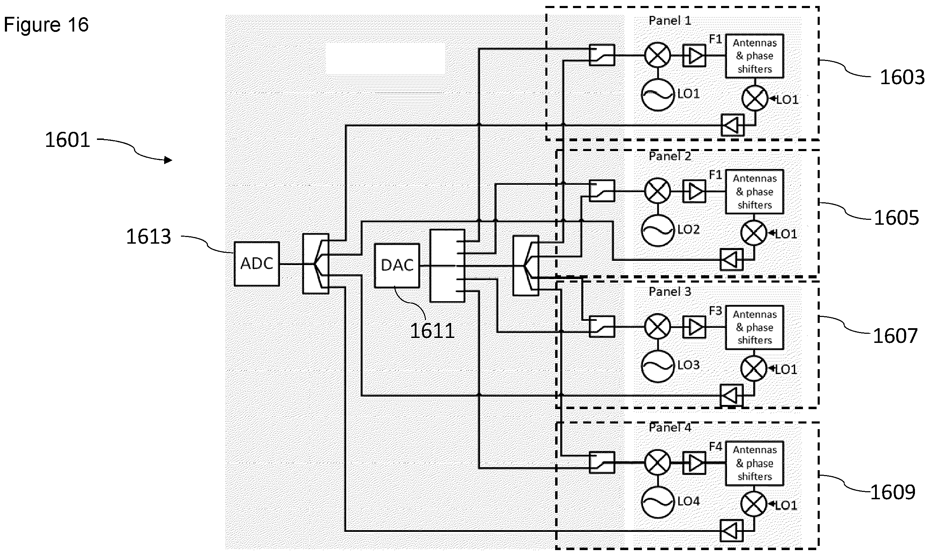

The hardware architecture for Rx and Tx branches is shown in Figure 15 (based on Figure 10 with interleaved LO offsetting shown in Figure 16) with a separate ADC per antenna panel.

Figure 15 shows a schematic representation of a transceiver with a single digital to analogue converter and multiple analogue to digital converters, according to examples.

The transceiver 1501 comprises four RF chains 1503, 1505, 1507, 1509. The RF chains are identified in Figure 15 in dotted line boxes. Each RF chain comprises a separate LO. Each RF chain is connected to a separate ADC. A single DAC 1511 is connected to all four RF chains.

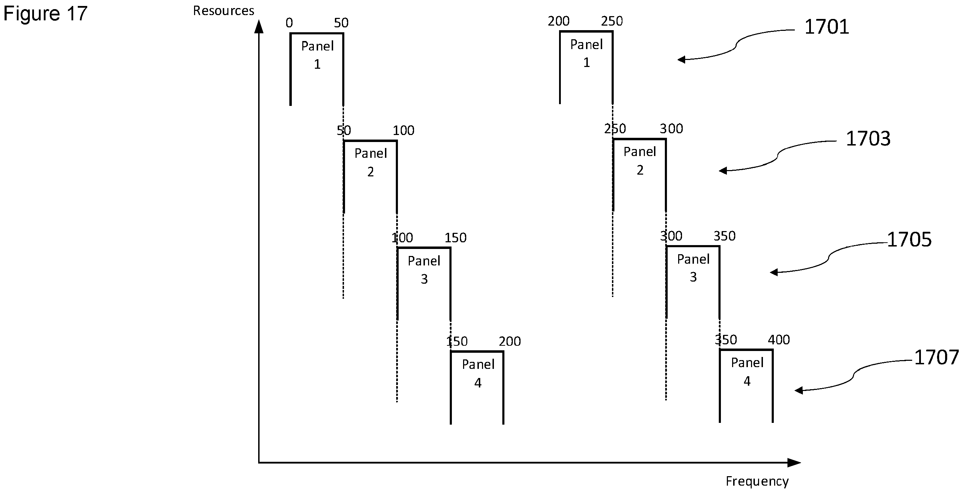

Each of the signals received by the transceiver is processed by the independent RF chains 1503, 1505, 1507. 1509 in the baseband, and after FFT transformation the wanted blocks of the RF signal can be extracted. Any irrelevant/unused subcarriers may be ignored/zeroed. In this example, the first panel of RF chain 1403 operates at [0-50] MHz of the allocated bandwidth and [200-250] MHz. The second panel of RF chain 1405 operates with a LO offsetting of 50 MHz (relative to the first panel) for a signal at [50-100] MHz and [250-300] MHz. The third panel of RF chain 1407 operates with a LO offsetting of 50 MHz (relative to the second panel) for a signal at [100-150] MHz and [300-350] MHz. The fourth panel of RF chain 1409 operates with a LO offsetting of 50 MHz (relative to the third panel) for a signal at [150-200] MHz and [350-400] MHz. This is illustrated in Figure 17.

Figure 16 shows a schematic representation of a transceiver with a single digital to analogue converter and a single analogue to digital converter, according to examples.

The configuration of the transceiver of Figure 16 is similar to that of Figure 15, with the difference that there is a single ADC. Reducing the number of ADCs to one may be useful for RedCap applications, where space in a device is limited. The RF architecture in Figure 16 may include the interleaved LO operation, as discussed in Figure 15 above.

The transceiver 1601 comprises four RF chains 1603, 1605, 1607, 1609. The RF chains are identified in Figure 16 in dotted line boxes. Each RF chain, in the Tx chain, comprises a separate LO. A single DAC 1611 is connected to all four RF chains. The receive side of the RF chains are connected to a single ADC 1613.

In all of the four RF chains 1603, 1605, 1607, 1609, for the Rx side, the Rx mixer is provided with the LO1 signal. The LO1 signal is the signal generated by the Tx LO of the first RF chain 1603. In this way, the Rx side LO frequencies are the same, in this example,

The antenna panels of each of the RF chains 1603, 1605, 1607, 1609 may be configured in the same way as the antenna panels of Figure 15. The antenna panels may be configured for an interleaved LO operation. For the Tx chain, each LO of each RF chain 1603, 1605, 1607, 1609 may have offset frequencies. This is illustrated in Figure 17.

Figure 17 shows a graphical example of local oscillator offsetting in an interleaved manner being used by the transceiver of Figure 15 or Figure 16.

The frequencies generated and shown in Figure 17 are for a transmitter/receiver/transceiver with four antenna panels. A first panel operates at 0-50 MHz of the allocated bandwidth and 200-250 MHz, labelled as 1701. A second panel operates with a LO offsetting of 50 MHz (relative to LO1) for a signal at 50-100 MHz and 250-300 MHz, labelled as 1703. A third panel operates with a LO offsetting of 100 MHz (relative to LO1) for a signal at 100-150 MHz and 300-350 MHz, labelled as 1705. A fourth panel operates with a LO offsetting of 150 MHz (relative to LO1) for a signal at 150-200 MHz and 350-400 MHz, labelled as Figure 1707.

In examples using a single ADC (such as Figure 17), a high isolation may be required between the panels to avoid inter-panel interference if the received signal is weak. For example, if the reflector is at a large distance for radar application. This issue can be addressed with, for example:

1. Additional filtering and switching on each of the ADC branches before the summing:

   A. One filter per antenna panel per block with a switch in order to only utilize this function only when needed:

      i. Enabling filtering. For example, a radar operation where interference is an issue. This may occur when the reflector is further away.
      ii. Disabling filtering. For example, a regular communication with gNB or when radar signal is strong enough to be accurately decoded.

   B. A small/slight guard band between the blocks may be used to maximize filtering capability.

2. Smart offsetting of the LOs in both the Tx chains and the Rx chains:

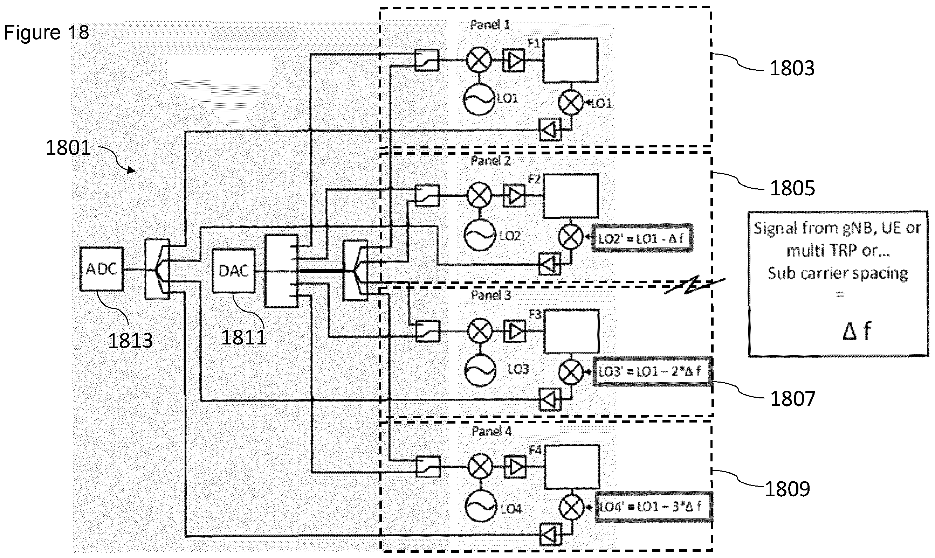

   A. Tx chains may use LO1, LO2, LO3 and LO4 for panel 1, panel 2, panel 3 and panel 4 respectively (in a four panel system).
   B. Rx chains may use a subcarrier spacing offset '$\Delta f$' in order to shift the interference into a null of the wanted carrier and achieve decorrelation of the wanted signal and the interference, with LO2' = LO1 - $\Delta f$. This is shown in more detail in Figure 18.

Figure 18 shows another schematic representation of a transceiver with a single digital to analogue converter and a single analogue to digital converter, according to examples.

The circuitry of Figure 18 is similar to Figure 16. Figure 18 shows an example of LO offsetting in an interleaved manner with a single DAC and a single ADC. The transceiver comprises four antenna panels, whereby panels 1 to 4 are programmed with a 50 MHz offset. Potential inter-panel interference is mitigated by only using every 4th subcarrier and by nulling in-between subcarriers. Following this, offsetting the LOs in the Rx chain with n*subcarrier spacing, where n is different per RX chain.

It should be appreciated that the transceiver 1801 comprising four antenna panels is an example only. In other examples, a transceiver may have more or less than four panels. For example, two or eight antenna panels.

The transceiver 1801 comprises four RF chains 1803, 1805, 1807, 1809. The RF chains are identified in Figure 18 in dotted line boxes. Each RF chain, in the Tx chain, comprises a separate LO, and a separate antenna (or antenna panel). A single DAC 1811 is connected to all four RF chains. The receive side of the RF chains are connected to a single ADC 1813.

In all of the four RF chains 1803, 1805, 1807, 1809, for the Rx side, the Rx mixer is provided with offset frequencies. The first RF chain 1803 has frequency LO1 provided into the Rx side mixer (i.e. the same frequency as the Tx side of the first RF chain 1803). The second RF chain 1805 has frequency LO2, wherein LO2 = LO1 - $\Delta f$. The third RF chain 1807 has frequency LO3, wherein LO2 = LO1 - 2*$\Delta f$. The fourth RF chain 1809 has frequency LO4, wherein LO4 = LO1 - 3*$\Delta f$. '$\Delta f$' is a subcarrier spacing offset. The subcarrier spacing offset may be used in order to shift the interference into a null of the wanted carrier and achieve decorrelation of the wanted signal and the interference.

The signals, received at the transceiver 1801, may have a subcarrier spacing of Δf, where every 4th subcarrier is active, and the in-between subcarriers are nulled. Offsetting the LO's in each receiver chains (LO2, LO3 and LO4) by this value (Δf) enables decoding (simultaneously) on all of the antenna panels, while distinguishing which panels receive the signal. The received signals may be from gNBs, UEs, multi TRPs, for example.

Sub-carrier spacing for signals to be demodulated at the ADC 1813 may equal 'Δf'. Simultaneous quality metrics may be calculated from the same FFT and demodulation process. This may be used for fast beam alignment or antenna panel searching. Down converting and PLL, for each antenna, may also be performed.

The antenna panels of each of the RF chains 1803, 1805, 1807, 1809 may be configured in the same way as the antenna panels of Figure 15. The antenna panels may be configured for an interleaved LO operation. For the Tx chain, each LO of each RF chain 1803, 1805, 1807, 1809 may have offset frequencies. This is illustrated in Figure 17.

In this example, the single-DAC 1811 and single-ADC 1813 architecture is considered to have an improved antenna panel isolation. Any filtering is to be performed in the digital domain. In examples, offsetting the LOs and multiplexing the panel signals may be done in any suitable manner. In this example, interleaving of the signals for each subcarrier is presented. In general, the equivalent complex baseband signal for OFDM is described as:

$$x(t) = \sum_{k=0}^{N-1} X_k e^{j2\pi\Delta f k t}, \; 0 \leq t < T$$

Where $X_k$ are the data subcarrier symbols,

N is the number of subcarriers,
$k$ is the subcarrier index,
Δf is the subcarrier spacing,
T is the OFDM symbol time, where Δf · T = 1

Figure 19 shows a schematic representation of a transmitter with two antenna panels, wherein local oscillators are offset by one sub-carrier spacing, according to examples.

In the example of Figure 19 a reference DAC TX baseband signal is constructed for M antenna panels with active subcarrier spacing MΔf. Following this, the LOs for each of the M antenna panels are offset by Δf.

The components of the transmitter of Figure 19 are the same as the transmitter of Figure 7.

A first graphical representation 1901 shows a signal provided by a DAC to each of two Tx RF chains, via a multiplexer.

A second graphical representation 1903 shows a first Rx signal provided to a first Rx RF chain. A third graphical representation 1905 shows a second Rx signal provided to a second Rx chain.

A fourth graphical representation 1907 shows a first signal transmitted by the first RF chain. A fifth graphical representation 1909 shows a second signal transmitted by the second RF chain.

As shown in Figure 19, the signals being transmitting by the first antenna panel (graph 1907), are offset in frequency from the signals being transmitting by the second antenna panel (graph 1909). This offset in the transmitted signals is achieved due to the frequencies of the LOs being offset by one subcarrier spacing. This allows simultaneous use of both antenna panels for transmission. Receivers that receive the signals from those antenna panels may then determine which of the two antenna panels a signal has been transmitted from (due to the different (frequency) signals). The peaks of these signals are offset from each other by 120 kHz, in this example. In other examples, the offset may be higher or lower than 120 kHz.

In this example, the frequency difference between the peaks of the signals in the graphical representations 1901, 1903, 1905, 1907 is 240 kHz (illustrated with arrows between the waves of the signals). In other examples, the frequency may be more or less than 240 kHz.

Figure 19 is an example with a two panel-UE. In this example, there is offsetting of the LOs by one sub-carrier spacing (i.e. LO2=LO1 + 120 kHz). In other examples, the transmitter may have more than two panels. The subcarrier spacing may be calculated according to the number of panels. In this example, M=2, therefore 240 Hz/2 = 120 kHz:

$$M = 2; Subcarrier\ spacing: \Delta f\ (LO1) = \Delta f(LO2) = 120\ kHz$$

In examples, transmitted RF signals are shifted in frequency over M panels by offsetting $LO_{m+1}$ by Δf, wherein $0 \leq m \leq M - 1$. A goal of this offset is to separate the signals from each of the panels. This may avoid inter-panel interference when multiple panels are simultaneously active. For example, during radar operation at a multi-panel UE.

To be able to multiplex the panel signals, in examples, there is a generation of equivalent complex reference Tx signals with *N/M* active subcarriers with frequency spacing MΔf at the baseband as follows:

$$\tilde{x}(t) = \sum_{k=0,M,2M,\dots}^{N-1} X_k e^{j2\pi\Delta fkt}, \ 0 \le t < T$$

Where $X_k$ are the data subcarrier symbols,

N is the number of subcarriers,
*k* is the subcarrier index,
Δf is the subcarrier spacing,
T is the OFDM symbol time, where Δf · T = 1

In this example, the Tx signal generated at the baseband (only) utilizes active subcarriers spaced by M (i.e. k=0, M, 2M, ..., N-1 where M is the number of panels). This is different to some known systems as opposed to the legacy Tx generation where every subcarrier is active (i.e. k=0, 1, 2, 3, ..., N-1). This is applicable to any M panel UE. The non-active sub-carriers are nulled as described in the baseband signal generation paragraph below.

At the receiver, the individual panel signals with active subcarrier spacing MΔf are combined into a single ADC signal with a resulting subcarrier spacing of Δf and then demultiplexed into M separate panel signals after demodulation. Hence, after demodulation of all the multiplexed N subcarriers, subcarrier extraction for each corresponding panel m can be written as:

$$Y_m = Y_k, \ k \in \{m, m+M, m+2M, \dots, N-1\}$$

Wherein $Y_k$ is the demodulated data symbol for subcarrier k,

$Y_m$ is the sequence of sub-carriers corresponding to panel m, where $0 \le m \le M$ - 1 N is the total number of subcarriers, M is the number of antenna panels.

In some examples, to ensure the orthogonality between subcarriers over each symbol period, the subcarrier spacing Δf may be equal to 1/T , i.e. Δf · T = 1.

Therefore, spectral nulling may be applied to $\tilde{x}(t)$ for the non-active subcarriers $k \ne 0, M, 2M, \dots$ to obtain orthogonality by ensuring a resulting subcarrier spacing of Δf. Spectral nulling is when carriers are offset such that the peak of one corresponds to the null of another. The spectral nulling may be applied in any suitable manner.

In some examples, the application of spectral nulling by directly applying spectral nulling to the OFDM signal in the frequency domain has the disadvantage of a relatively poor peak-to-average power ratio (PAPR) of $\tilde{x}(t)$. The peak-to-average ratio may be reduced to keep power amplifier linearity and/or to minimize distortion by exploiting that the *N/M* active subcarriers are evenly spaced among all the N subcarriers, and the unoccupied subcarriers are filled with zeros.

A known technique from the interleaved frequency division multiple access (IFDMA) scheme may be utilized, whereby information of users is multiplexed on interleaved subcarriers within a shared spectrum. As such, exploiting the IFDMA baseband signal as a multiplexing technique for radar application with single DAC architecture, $\tilde{z}(t)$, can be performed M times repeating of the size *N/M* block of the original subcarrier symbols, $X_k$, followed by normalization by *1/M,* as follows:

$$\tilde{z}(t) = 1/M \cdot X_k[n \ mod \ N/M], n \in \{0,1,\dots,N-1\}$$

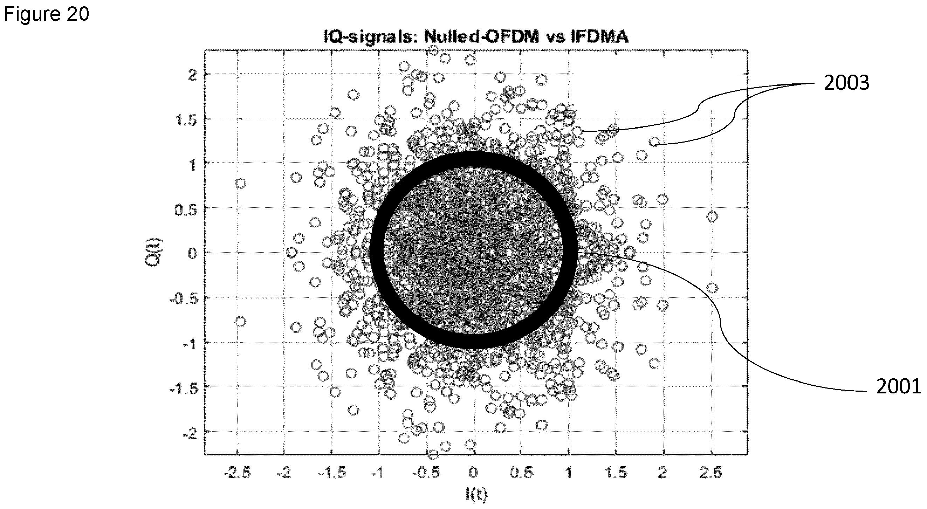

In some examples, there is provided a direct time domain transmitter with constant envelope properties which bypasses the IFFT block used in a traditional OFDM transmitter as illustrated in Figure 20. In this example, the complex baseband signal *I(t) + jQ(t)* is shown for both IFDMA and Nulled-OFDM:

Figure 20 shows a graphical representation of IQ signals for IFDMA vs nulled-OFDM. Quadrature signals, also called IQ signals, are often used in RF applications. They form the basis of complex RF signal modulation and demodulation, as well as in complex signal analysis. On the x-axis of Figure 20 is the I(t) part of the IQ signal. On the y-axis of Figure 20 is the Q(t) part of the IQ signal. Figure 20 shows IQ signals for OFDM vs IFDMA, wherein N=4096, M-2. $X_k$ is a random polar sequence $\in$ {-1; +1}.

As can be seen in Figure 20, the IFDMA baseband signal 2001, $\tilde{z}(t)$, may be designed to have a constant envelope. This is therefore superior in terms of peak-to-average power ratio (PAPR) compared to OFDM with nulled subcarriers 2003 for this example, where the one-DAC transmitter panel signals are multiplexed by interleaving the resulting subcarriers.

It should be understood that the one or more operations performed by each of the components described any of the Figures described previously may instead be performed by any suitable means within each system.

Some example use cases of the transmitters described previously may be for radar on UEs, internet of things reduced capability (IOT RedCap), and/or sidelink communications.

In a radar use case, the offsetting of the local oscillators may be performed to be able to digitally remove strong signals from adjacent antenna panels. This results in a better detection of signals that may be reflected from nearby objects. Unintentional signals, which may be due to limited isolation between the antenna panels, may be identified and removed digitally.

In a RedCap/sidelink use case, receive circuitry of other RF units may use a method of decorrelating the signals by offsetting the local oscillators in order simultaneously receive multiple synchronization signals, which may speed-up beam alignment and beam-tracking algorithms. With a single ADC (Rx chain), UEs may (only) sequentially scan the UEs panel. However, in examples previously described, a UE with a single ADC may scan with multiple panels simultaneously, thereby speeding up discovery of other UEs, or alignment between UEs, or between UE and network node, as examples.

One or more of the examples discussed above enables an implementation of separate i) RF front-end modules, ii) antenna panels or iii) radio heads to be a) measured, b) tuned, c) verified and/or d) optimized simultaneously using one baseband transmit signal only. The configuration of the transmitter is also applicable for any RF front end tuning such as for example, tunable filters, antenna matching or any other adaptable RF front end tuning or calibration.

Simultaneous radar utilization per antenna panel may be useful to minimize the UL throughput degradation resulting from gap slot scheduling. It should be understood that examples referring to UL gaps (though the same principles) are also applicable to DL gaps, measurement windows, whereby a UE is performing radar measurements.

One or more of the examples above allows communications at the transmitter to occur with no (or minimum) interruption. For example, little to no interruption to ongoing data transmissions. This is because a UE has to interrupt PUSCH (data transmissions) to perform radar operation. The baseline is to perform radar per panel sequentially but in examples previously described, a UE can perform radar scan on all panels simultaneously. Therefore this reduces PUSCH interruption time by a factor of the number of panels.

Furthermore, there is a higher through-put, with a reduced chance for link failure, due to missed control signalling from the network during a "measurement gap" which may be used without the transmitter examples described previously. If a UE does not perform the radar operations, then the UE does not know whether there is a human nearby. Therefore the UE needs to reduce output power to be compliant with MPE. This UE output power reduction may cause failures.

Furthermore, this enables UE autonomous and simultaneous blockage detection on one of more of the antenna panels of the UE. With the LO offsetting, this enables a UE to perform radar simultaneously on multiple panels, even though the UE may have a single DAC.

Power management maximum power reduction (P-MPR) is the allowed maximum output power reduction for a) ensuring compliance with applicable electromagnetic energy absorption requirements and addressing unwanted emissions requirements in case of simultaneous transmissions on multiple RAT(s) for scenarios not in scope of 3GPP RAN specifications, b) ensuring compliance with applicable electromagnetic energy absorption requirements in case of proximity detection is used to address such requirements that require a lower maximum output power. One or more of the examples allow fast and accurate P-MPR reporting. After radar operation, the UE knows if there is a human and applies a maximum output power reduction (or not) (i.e. P-MPR). The P-MPR value determined by the UE is reported to network in the power headroom report. If a UE could only perform sequential panel radar operations, then it would take longer to evaluate a human presence and report it to network, than performing radar on all panels simultaneously. Furthermore, examples described previously are also more accurate because the faster the scan, the more precisely the UE is able to track (human) hand movement around the phone.

Furthermore, one or more of the examples lead to optimised resources usage dedicated to UL gaps. For example, if a UE needs 100 samples per panel to accurately detect a user presence. Then if UE has 4 panels, it would need 400 samples to detect user presence on all panels if the UE were to perform this sequentially (i.e. 100 samples * 4 panels = 400 samples). According to previous examples, the UE performs the operations on the panels simultaneously. Therefore the UE requires 100 samples to perform radar, and detect user on all four panels.

There may also be simultaneous beam management on all antenna panels yielding clear benefits in latency for beam acquisition and resource optimization for: UE to UE communications (e.g. via a PC5 interface) and/or UE to gNB communications (e.g. via a UU interface).

One or more of the examples of transmitter will save on complexity and cost of the device. This is because the transmitter device (e.g. UE) does not require additional sensors or additional RF front ends in order to perform optimally during UL gaps.

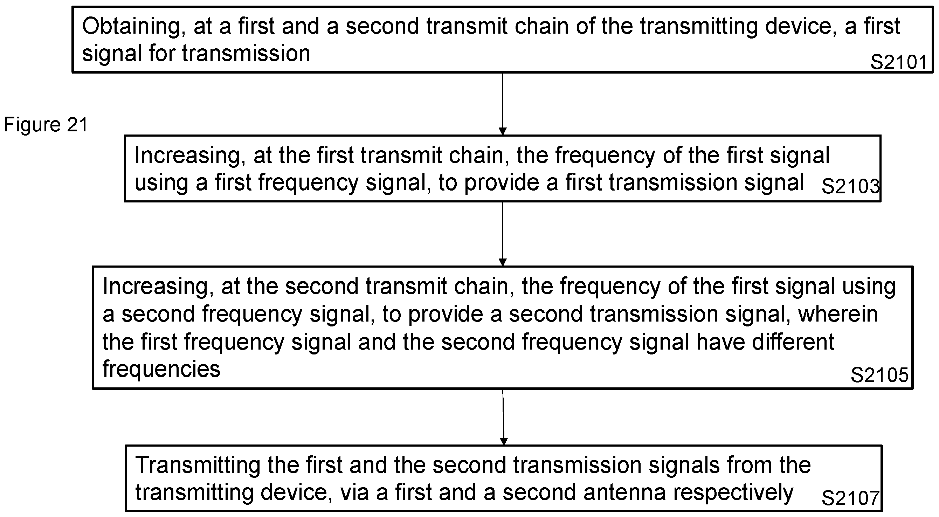

Figure 21 shows an example method flow performed by an apparatus. The apparatus may be comprised within a transmitting device. In an example, the transmitting device may be a UE.

In S2101, the method comprises obtaining, at a first and a second transmit chain of the transmitting device, a first signal for transmission.

In S2103, the method comprises increasing, at the first transmit chain, the frequency of the first signal using a first frequency signal, to provide a first transmission signal.

In S2105, the method comprises increasing, at the second transmit chain, the frequency of the first signal using a second frequency signal, to provide a second transmission signal, wherein the first frequency signal and the second frequency signal have different frequencies.

In S2107, the method comprises transmitting the first and the second transmission signals from the transmitting device, via a first and a second antenna respectively.

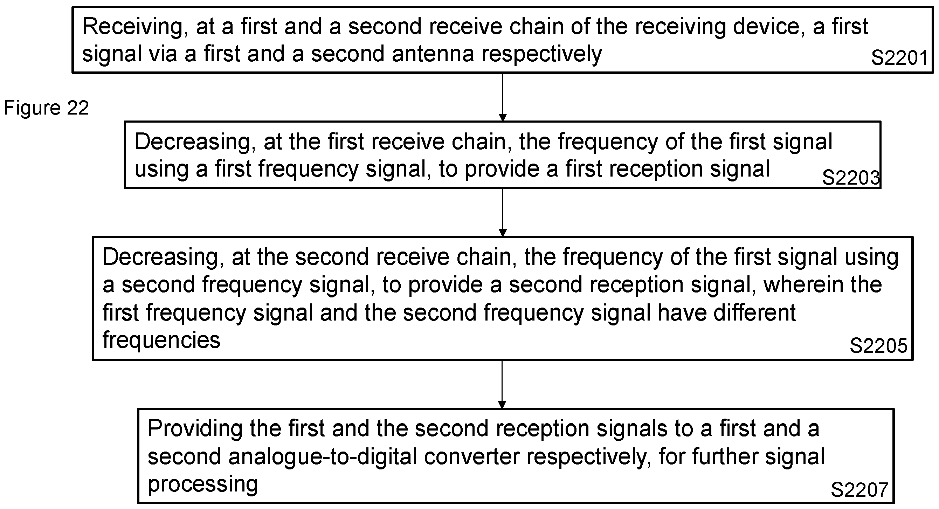

Figure 22 shows an example method flow performed by an apparatus. The apparatus may be comprised within a receiving device. In an example, the receiving device may be a UE.

In S2201, the method comprises receiving, at a first and a second receive chain of the receiving device, a first signal via a first and a second antenna respectively.

In S2203, the method comprises decreasing, at the first receive chain, the frequency of the first signal using a first frequency signal, to provide a first reception signal.

In S2205, the method comprises decreasing, at the second receive chain, the frequency of the first signal using a second frequency signal, to provide a second reception signal, wherein the first frequency signal and the second frequency signal have different frequencies.

In S2207, the method comprises providing the first and the second reception signals to a first and a second analogue-to-digital converter respectively, for further signal processing.

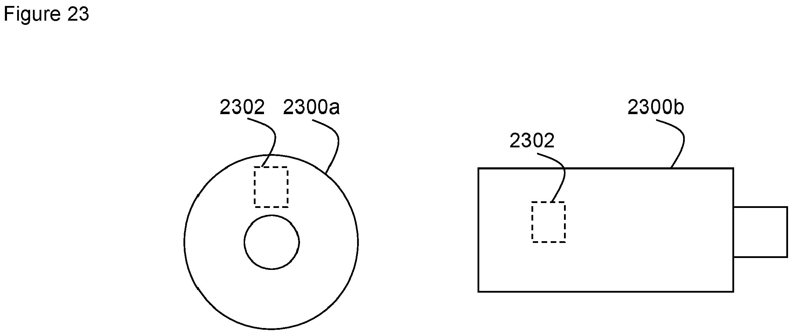

Figure 23 shows a schematic representation of non-volatile memory media 2300a (e.g. computer disc (CD) or digital versatile disc (DVD)) and 2300b (e.g. universal serial bus (USB) memory stick) storing instructions and/or parameters 2302 which when executed by a processor allow the processor to perform one or more of the steps of the method of Figure 21 or Figure 22.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);

(b) combinations of hardware circuits and software, such as:

(i) a combination of analogue and/or digital hardware circuit(s) with software/firmware and

(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

**Claims**

1. An apparatus for a transmitting device, the apparatus comprising:

   a first and a second up-converter circuit;
   a first and a second local oscillator;
   a first and a second antenna,
   wherein the first up-converter circuit comprises the first local oscillator, and the second up-converter circuit comprises the second local oscillator,
   wherein the first and the second local oscillators are configured to generate different frequency signals from each other,
   wherein each of the first and the second up-converter circuits are configured to:

      obtain a first signal for transmission;
      increase the frequency of the first signal using the first and the second local oscillators respectively; and
      provide the increased frequency first signal to the first and the second antennas respectively, for transmission.

2. The apparatus according to claim 1, wherein each of the first and the second up-converter circuits are configured to obtain the first signal for transmission and provide the increased frequency first signal for transmission during an uplink gap time slot.

3. The apparatus according to claim 1 or claim 2, wherein the frequency generated by each of the first and second local oscillators is selected using: block frequencies that are offset within an available bandwidth, or a subcarrier offset between the first and second local oscillators.

4. The apparatus according to any of claims 1 to 3, wherein i) the first up-converter circuit, ii) the first local oscillator, and ii) the first antenna, are comprised within a first radio frequency chain.

5. The apparatus according to any of claims 1 to 4, wherein i) the second up-converter circuit, ii) the second local oscillator, and iii) the second antenna, are comprised within a second radio frequency chain.

6. The apparatus according to any of claims 1 to 5, wherein the apparatus comprises three or more radio frequency chains, each radio frequency chain comprising an up-converter circuit, a local oscillator, and an antenna,
   wherein each frequency of signals generated by each local oscillator in the three or more radio frequency chains are different from each other.

7. The apparatus according to any of claims 1 to 6, wherein the apparatus comprises: a digital-to-analogue converter configured to provide the first signal for transmission.

8. The apparatus according to claim 7, wherein the digital-to-analogue converter is connected to both the first and the second antennas via the first and the second up-converter circuitry respectively.

9. The apparatus according to any of claims 1 to 8, wherein: the first up-converter circuit comprises a first mixer and a first power amplifier, and the second up-converter circuit comprises a second mixer and a second power amplifier.

10. The apparatus according to any of claims 1 to 9, wherein the first signals, for transmission, by each of the first and second antennas respectively are interleaved for each of the first and second antennas, such that the frequencies of the first signals of each of the first and second antennas are separate.

11. The apparatus according to any of claims 1 to 10, wherein the frequency generated by the first local oscillator and the frequency generated by the second generated by the second local oscillator are selected based on i) a total available bandwidth, and ii) a number of antenna panels within the receiving device.

12. An apparatus for a receiving device, the apparatus comprising:

   a first and a second antenna;
   a first and a second down-converter circuit;
   a first and a second local oscillator;
   a first and a second analogue to digital converter,
   wherein the first down-converter circuit comprises the first local oscillator, and the second down-converter circuit comprises the second local oscillator,
   wherein the first and the second local oscillators are configured to generate different frequency signals from each other,
   wherein each of the first and the second down-converter circuits are configured to:

      receive a first signal via the first and second antenna respectively;
      decrease the frequency of the first signal using the first and the second local oscillators respectively; and
      provide the decreased frequency first signal to the first and the second analogue to digital converters respectively, for further signal processing.

13. A method performed by a transmitting device, the method comprising:

   obtaining, at a first and a second transmit chain of the transmitting device, a first signal for transmission,
   increasing, at the first transmit chain, the frequency of the first signal using a first frequency signal, to provide a first transmission signal;
   increasing, at the second transmit chain, the frequency of the first signal using a second frequency signal, to provide a second transmission signal,
   wherein the first frequency signal and the second frequency signal have different frequencies; and
   transmitting the first and the second transmission signals from the transmitting device, via a first and a second antenna respectively.

14. A method performed by a receiving device, the method comprising:

   receiving, at a first and a second receive chain of the receiving device, a first signal via a first and a second antenna respectively;
   decreasing, at the first receive chain, the frequency of the first signal using a first frequency signal, to provide a first reception signal;
   decreasing, at the second receive chain, the frequency of the first signal using a second frequency signal, to provide a second reception signal,
   wherein the first frequency signal and the second frequency signal have different frequencies; and
   providing the first and the second reception signals to a first and a second analogue-to-digital converter respectively, for further signal processing.

15. An apparatus for a transceiving device, the apparatus comprising:

   a digital-to-analogue converter;
   a first and a second up-converter circuit;

a first and a second local oscillator;
a first and a second antenna;
a first and a second down-converter circuit;
a first and a second analogue-to-digital converter;
wherein the first up-converter circuit and the first down-converter circuit are both connected to the first local oscillator, wherein the second up-converter circuit and the second down-converter circuit are both connected to the second local oscillator,
wherein the first and the second local oscillators are configured to generate different frequency signals from each other,
wherein each of the first and the second up-converter circuits are configured to:

obtain a first signal for transmission;
increase the frequency of the first signal using the first and the second local oscillators respectively; and
provide the increased frequency first signal to the first and the second antennas respectively, for transmission;

wherein each of the first and the second down-converter circuits are configured to:

receive a second signal via the first and second antenna respectively;
decrease the frequency of the second signal using the first and the second local oscillators respectively; and
provide the decreased frequency second signal to the first and the second analogue to digital converters respectively, for further signal processing.

Figure 1

Figure 2

(a)

(b)

Figure 3

Figure 4

Figure 5

Figure 6

Figure 7

EP 4 311 116 A1

Figure 8

Figure 9

Figure 10

1017a

Antennas & phase shifters

1021a

1015a

LO1

1023a

1013a

1019a

F1

Mm wave

1005

1004

1025a

ADC 1

IF only < 7 GHz

DAC

1003

1017b

Antennas & phase shifters

1015b

1013b

LO2

F2

1007

1019b

1021b

1023b

ADC 2

1025b

Figure 11

EP 4 311 116 A1

Figure 12

$r1(t)= a1*s1(t) + x(t)*s2(t) + a21*s2(t)$

$r2(t)= a2*s2(t) + x(t)*s1(t) + a12*s1(t)$

EP 4 311 116 A1

EP 4 311 116 A1

Figure 13

37

Figure 14

Figure 15

Figure 16

EP 4 311 116 A1

Figure 17

Figure 18

Figure 19

EP 4 311 116 A1

Figure 20

Figure 21

Obtaining, at a first and a second transmit chain of the transmitting device, a first
signal for transmission

S2101

Increasing, at the first transmit chain, the frequency of the first signal
using a first frequency signal, to provide a first transmission signal

S2103

Increasing, at the second transmit chain, the frequency of the first signal using
a second frequency signal, to provide a second transmission signal, wherein
the first frequency signal and the second frequency signal have different
frequencies

S2105

Transmitting the first and the second transmission signals from the
transmitting device, via a first and a second antenna respectively

S2107

Figure 22

Receiving, at a first and a second receive chain of the receiving device, a first signal via a first and a second antenna respectively
S2201

Decreasing, at the first receive chain, the frequency of the first signal using a first frequency signal, to provide a first reception signal
S2203

Decreasing, at the second receive chain, the frequency of the first signal using a second frequency signal, to provide a second reception signal, wherein the first frequency signal and the second frequency signal have different frequencies
S2205

Providing the first and the second reception signals to a first and a second analogue-to-digital converter respectively, for further signal processing
S2207

Figure 23

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2014/233672 A1 (CAMPOS LUIS ALBERTO [US] ET AL) 21 August 2014 (2014-08-21)<br>* abstract *<br>* paragraphs [0013] - [0053] *<br>* figure 7 * | 1,3-15<br><br>2 | INV.<br>H04B1/403 |
| A | US 2021/266052 A1 (FERNANDO UDARA [US] ET AL) 26 August 2021 (2021-08-26)<br>* abstract *<br>* paragraphs [0025] - [0184] *<br>* figures 1-12 * | 1-15 | |
| A | US 2020/229102 A1 (GUBESKYS ARTHUR [US] ET AL) 16 July 2020 (2020-07-16)<br>* abstract *<br>* paragraphs [0021] - [0092] *<br>* figures 1-7 * | 1-15 | |
| E | WO 2022/169266 A1 (SAMSUNG ELECTRONICS CO LTD [KR]) 11 August 2022 (2022-08-11)<br>* abstract *<br>* paragraphs [0027] - [0520] *<br>* figures 1-15 * | 1,2 | TECHNICAL FIELDS SEARCHED (IPC)<br><br>H04B<br>G01S |

The present search report has been drawn up for all claims

| Place of search | Date of completion of the search | Examiner |
|---|---|---|
| Munich | 23 December 2022 | Aquilani, Dario |

EPO FORM 1503 03.82 (P04C01)

## ANNEX TO THE EUROPEAN SEARCH REPORT
## ON EUROPEAN PATENT APPLICATION NO.

**EP 22 18 5772**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-12-2022**

| Patent document cited in search report | | Publication date | Patent family member(s) | | Publication date |
|---|---|---|---|---|---|
| US 2014233672 | A1 | 21-08-2014 | US | 2014233661 A1 | 21-08-2014 |
| | | | US | 2014233666 A1 | 21-08-2014 |
| | | | US | 2014233672 A1 | 21-08-2014 |
| | | | US | 2014233678 A1 | 21-08-2014 |
| | | | WO | 2014127317 A1 | 21-08-2014 |
| US 2021266052 | A1 | 26-08-2021 | CN | 115152155 A | 04-10-2022 |
| | | | EP | 4107867 A1 | 28-12-2022 |
| | | | US | 2021266052 A1 | 26-08-2021 |
| | | | WO | 2021167742 A1 | 26-08-2021 |
| US 2020229102 | A1 | 16-07-2020 | NONE | | |
| WO 2022169266 | A1 | 11-08-2022 | KR | 20220112704 A | 11-08-2022 |
| | | | US | 2022256519 A1 | 11-08-2022 |
| | | | WO | 2022169266 A1 | 11-08-2022 |

EPO FORM P0459

For more details about this annex : see Official Journal of the European Patent Office, No. 12/82